# EUROPEAN PATENT APPLICATION

(11) **EP 3 336 443 A1**
(43) Date of publication of application: **20.06.2018**
(21) Application number: 15901008.1
(22) Date of filing: 11.08.2015
(51) Int. Cl.: F24F 11/02

(54) **AIR CONDITIONING SYSTEM**

(71) Applicant: Mitsubishi Electric Corporation, Chiyoda-ku Tokyo 100-8310 (JP)
(72) Inventor: HATA, Masahiro, Tokyo 100-8310 (JP); MATSUZAWA, Koji, Tokyo 100-8310 (JP); HATTORI, Taro, Tokyo 100-8310 (JP)
(74) Representative: Pfenning, Meinig & Partner mbB
(86) International application number: PCT/JP2015/072791
(87) International publication number: WO 2017/026054

(57) **Abstract**

Provided is an air-conditioning system in which a heat exchanger included in an air handling unit is connected to respective compressors, outdoor heat exchangers, and pressure-reducing devices in a plurality of outdoor units by refrigerant pipes to form a plurality of heat pump cycles. The air-conditioning system includes a number-of-units control unit configured to select, on a basis of a load on the air handling unit and the individual capacities of the plurality of outdoor units, at least one outdoor unit to be operated from among the plurality of outdoor units, and cause the selected outdoor unit to operate.

## Description

### Technical Field

The present invention relates to an air-conditioning system including an air handling unit.

### Background Art

In the related art, there is known an air-conditioning system including an air handling unit, which is configured by integrally assembling one or a plurality of heat exchangers into a main casing (for example, see Patent Literature 1). The air handling unit disclosed in Patent Literature 1 takes in return air from an indoor space and outdoor air that has passed through a dehumidifier, conducts heat exchange with cooled water that has been cooled by a turbo freezer to cool the return air and the outdoor air, and supplies the cooled air to the indoor space.

During heating by the air-conditioning system, the air handling unit performs an operation of generating heated air by causing heated water or high-temperature refrigerant to pass through a heat exchanger and by causing outdoor air to pass through the heat exchanger, and sending the generated heated air to respective rooms inside a construction from ducts with an air-sending device. Further, during cooling by the air-conditioning system, the air handling unit causes cooled water or low-temperature refrigerant to pass through the heat exchanger, and performs an operation similar to that performed when heating.

In such an air handling unit, a boiler, a chiller, or a heat pump cycle is used as a heat source. In other words, the air handling unit adopts a configuration in which heated water generated by the boiler, cooled water or heated water generated by the chiller, or high-temperature refrigerant or low-temperature refrigerant generated by the heat pump cycle is allowed to flow through the heat exchanger.

### Citation List

### Patent Literature

Patent Literature 1: Japanese Unexamined Patent Application Publication No. 2010-71587

### Summary of Invention

### Technical Problem

However, in the case of an air handling unit that uses a heat pump cycle or other such device including a compressor as the heat source, when the load on the air handling unit falls below the minimum capacity of the heat pump cycle or other such device, it is necessary to perform an on-off cycle operation that repeatedly drives and stops the compressor to cope with the load demanded by the users. In this case, the minimum capacity refers to the capacity when the compressor included in the heat pump cycle or other such device is driven at a minimum operating frequency.

There is a problem in that, when the air handling unit falls into a state of performing an on-off cycle operation of the compressor, wear on various components is triggered and the lifetime of the heat source of the heat pump cycle or other such device is shortened, and thus reliability of the system is lowered. Further, there is a problem in that variations in the outlet temperature accompanying the on-off cycle operation of the compressor make people in the air-conditioned rooms uncomfortable. In particular, in the case of performing ventilation during intermediate seasons, the load on the air handling unit becomes lower than that of typical air conditioning, and thus the above problems become significant.

The present invention has been made to solve above-mentioned problems, and has an object to provide an air-conditioning system, which reduces a frequency of an on-off cycle operation of a compressor in a case of using an air handling unit that uses a heat pump cycle as a heat source.

### Solution to Problem

According to an embodiment of the present invention, there is provided an air-conditioning system including: a plurality of outdoor units, each including a compressor, an outdoor heat exchanger, and a pressure-reducing device; an air handling unit including a casing, in which a flow channel configured to perform ventilation by replacing air inside and outside a construction is formed, and a heat exchanger, which is provided inside the casing, and through which the air flowing in the flow channel passes; and a number-of-units control unit configured to control an operating state of the plurality of outdoor units, in which the plurality of outdoor units and the air handling unit are connected to each other by refrigerant pipes to form a plurality of heat pump cycles, each including the compressor, the heat exchanger, the pressure-reducing device, and the outdoor heat exchanger, and in which the number-of-units control unit is configured to select, on a basis of a load on the air handling unit and individual capacities of the plurality of outdoor units, at least one outdoor unit to be operated from among the plurality of outdoor units, and to cause the selected outdoor unit to operate.

### Advantageous Effects of Invention

The air-conditioning system according to an embodiment of the present invention includes the plurality of heat pump cycles, which are formed of the plurality of outdoor units and the heat exchanger included in the air handling unit, as a heat source. Further, the number-of-units control unit is configured to select at least one outdoor unit to be operated in accordance with the load on the air handling unit and the individual capacities of the respective outdoor units, and cause the selected outdoor unit to operate. As a result, the frequency of the on-off cycle operation of the compressor can be reduced.

### Brief Description of Drawings

[Fig. 1] Fig. 1 is a block diagram for illustrating a configuration of an air-conditioning system according to Embodiment 1 of the present invention.
[Fig. 2] Fig. 2 is a schematic diagram for illustrating a specific configuration of an air handling unit included in the air-conditioning system of Fig. 1.
[Fig. 3] Fig. 3 is a schematic diagram for illustrating a configuration of an outdoor unit included in the air-conditioning system of Fig. 1.
[Fig. 4] Fig. 4 is a flowchart for illustrating operations related to number-of-units control in the air-conditioning system of Fig. 1.
[Fig. 5] Fig. 5 is a block diagram for illustrating a configuration of an air-conditioning system according to Embodiment 2 of the present invention.
[Fig. 6] Fig. 6 is a block diagram for illustrating a configuration of an air-conditioning system according to Embodiment 3 of the present invention.
[Fig. 7] Fig. 7 is a block diagram for illustrating a configuration of an air-conditioning system according to Embodiment 4 of the present invention.
[Fig. 8] Fig. 8 is a block diagram for illustrating a configuration of an air-conditioning system according to Embodiment 5 of the present invention.

### Description of Embodiments

### Embodiment 1.

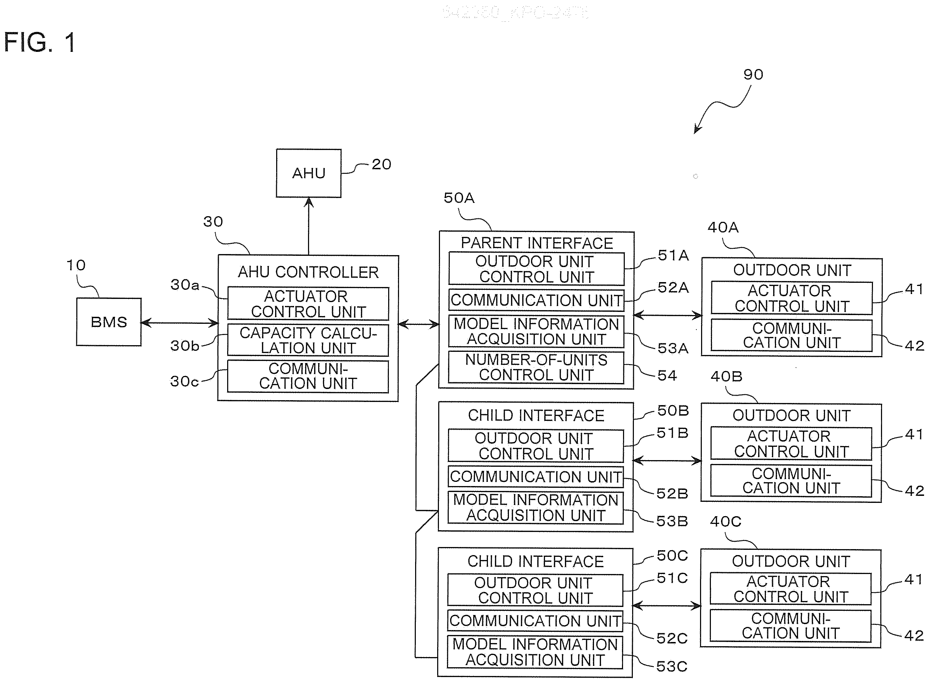

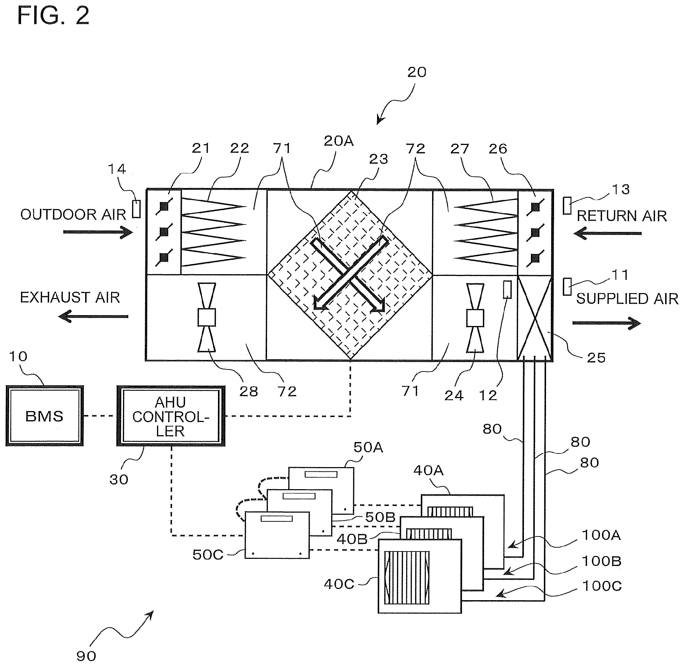

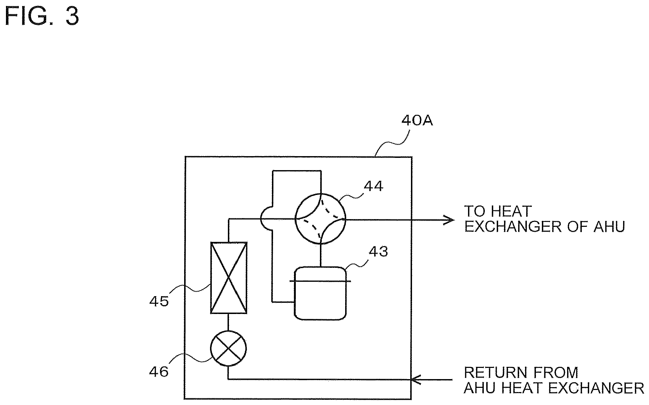

Fig. 1 is a block diagram for illustrating a configuration of an air-conditioning system according to Embodiment 1 of the present invention. Fig. 2 is a schematic diagram for illustrating a specific configuration of an air handling unit included in the air-conditioning system of Fig. 1. Fig. 3 is a schematic diagram for illustrating a configuration of an outdoor unit included in the air-conditioning system of Fig. 1.

As illustrated in Fig. 1, an air-conditioning system 90 includes a building management system (hereinafter referred to as "BMS") 10, an air handling unit (hereinafter referred to as "AHU") 20, an AHU controller (controller) 30, a plurality of outdoor units 40A to 40C, a parent interface 50A, and a plurality of child interfaces 50B and 50C. Hereinafter, when the plurality of outdoor units 40A to 40C are collectively referred to, or when at least one of the plurality of outdoor units 40A to 40C is selectively indicated, the simple term "outdoor unit 40" is used. Further, when the parent interface 50A and the plurality of child interfaces 50B and 50C are collectively referred to, the simple term "interface 50" is used.

The BMS 10 is configured to centrally manage air conditioning in a building's facilities and other facilities. The AHU 20 is installed inside a construction, for example, an office, a building, a commercial facility, or a factory, and is configured to perform ventilation by replacing the air inside and outside the construction. Further, the AHU 20 has a function of heating or cooling an indoor space while performing ventilation.

As illustrated in Fig. 2, the AHU 20 includes a first louver 21, a first filter 22, a heat recovery device 23, a supply fan 24, a heat exchanger 25, a second louver 26, a second filter 27, and an exhaust fan 28. Additionally, the AHU 20 includes a casing 20A in which a first flow channel 71 and a second flow channel 72 are formed. The first flow channel 71 takes in outdoor air through the first louver 21 and supplies the air to the indoor space, and the second flow channel 72 takes in return air (air inside the indoor space) through the second louver 26 and exhausts the air outdoors. In other words, the first louver 21, the first filter 22, the heat recovery device 23, the supply fan 24, and the heat exchanger 25 are provided in the first flow channel 71. Further, the second louver 26, the second filter 27, the heat recovery device 23, and the exhaust fan 28 are provided in the second flow channel 72.

The first louver 21 is configured to adjust the flow rate of outdoor air that flows into the first flow channel 71 from outdoors. The second louver 26 is configured to adjust the flow rate of return air that flows into the second flow channel 72 from air-conditioned rooms. The first filter 22 is configured to remove dust and other fine particles contained in outdoor air. The second filter 27 is configured to remove dust and other fine particles contained in return air.

The heat recovery device 23 is a device adopting a heat recovery technique, which reuses exhaust heat from indoors to warm outdoor air. The heat recovery device 23 is formed of a total heat exchanger or a sensible heat exchanger, for example, is arranged on the first flow channel 71 and on the second flow channel 72, and is configured to exchange heat between flows of air. In other words, the heat recovery device 23 is configured to exchange heat between air that is taken in through the first louver 21 and passes through the first flow channel 71, and air that is taken in through the second louver 26 and passes through the second flow channel 72. When outdoor air is supplied as it is, the discomfort index indoors tends to rise. Since the AHU 20 includes the heat recovery device 23, discomfort felt by people inside the air-conditioned rooms can be reduced.

The supply fan 24 is configured to form a flow of air from the first louver 21 to the heat exchanger 25. The exhaust fan 28 is configured to form a flow of air from the second louver 26.

The heat exchanger 25 is provided downstream of the supply fan 24 in the first flow channel 71. The heat exchanger 25 is configured to exchange heat between refrigerant flowing in from each of the outdoor units 40A to 40C and air passing through the first flow channel 71.

The heat exchanger 25 includes a plurality of independent refrigerant flow channels (not shown). Each refrigerant flow channel included in the heat exchanger 25 is joined to one of a plurality of refrigerant pipes 80. In addition, each refrigerant pipe 80 is connected to a corresponding one of the outdoor units 40A to 40C. In other words, the heat exchanger 25 and each of the outdoor units 40A to 40C are connected by the corresponding one of the plurality of refrigerant pipes 80, thereby forming three independent heat pump cycles 100A to 100C (hereinafter collectively referred to simply as "heat pump cycle 100"), each of which includes a compressor 43, the heat exchanger 25 of the AHU 20, a pressure-reducing device 46, and an outdoor heat exchanger 45 (see Fig. 3).

In the AHU 20 configured as described above, outdoor air flowing into the first flow channel 71 passes through the first louver 21 and the first filter 22, then exchanges heat with air passing through the second flow channel 72 in the heat recovery device 23, and flows into the heat exchanger 25. Air flowing into the heat exchanger 25 exchanges heat with refrigerant circulating between the heat exchanger 25 and each of the outdoor units 40A to 40C, and then is blown out into the space inside the construction. The air blown out into the space inside the construction is supplied to respective air-conditioned rooms through ducts (not shown), for example. Further, in the AHU 20, return air flowing into the second flow channel 72 passes through the second louver 26 and the second filter 27, then exchanges heat with air passing through the first flow channel 71 in the heat recovery device 23, and is exhausted outdoors.

In addition, the AHU 20 includes an outlet air temperature sensor 11, a heat exchanger inlet temperature sensor 12, an indoor temperature sensor 13, and an outdoor temperature sensor 14. The outlet air temperature sensor 11 is configured to detect the supply temperature, that is, the temperature of the air supplied to the indoor space from the first flow channel 71. The heat exchanger inlet temperature sensor 12 is configured to detect the temperature of the air flowing into the heat exchanger 25 from inside the casing 20A. The indoor temperature sensor 13 is configured to detect the temperature of the space inside the construction. The outdoor temperature sensor 14 is configured to detect the temperature of outdoor air flowing into the first louver 21 from outdoors. Each detected temperature detected by the outlet air temperature sensor 11, the heat exchanger inlet temperature sensor 12, the indoor temperature sensor 13, and the outdoor temperature sensor 14 is output to the AHU controller 30.

It is sufficient to provide the indoor temperature sensor 13 at a position enabling detecting of the temperature inside the construction. In other words, the indoor temperature sensor 13 is arranged to detect a temperature, for example, the outlet air temperature, which is the temperature of the air blown out into the construction from the AHU 20, or the return air temperature, which is the temperature of the air that returns to the AHU 20 from the space inside the construction. Depending on the design, the AHU 20 may be configured without being provided with some or all of the temperature sensors 11 to 14.

The configuration of the AHU 20 is not limited to the configuration illustrated in Fig. 2. It is sufficient for the AHU 20 to include at least a flow channel that performs ventilation by replacing air inside and outside the construction, and a heat exchanger through which air flowing through the flow channel passes. Further, the above description gives an example in which the heat exchanger 25 includes a plurality of independent refrigerant flow channels. However, the configuration of the heat exchanger 25 is not limited thereto, and the heat exchanger 25 may also be formed by a number of heat exchangers equal to the number of the plurality of outdoor units 40A to 40C.

The AHU controller 30 is configured to control the AHU 20, and includes an actuator control unit 30a, a capacity calculation unit 30b, and a communication unit 30c.

The actuator control unit 30a is configured to control the actuators of components such as the supply fan 24, the exhaust fan 28, the first louver 21, and the second louver 26 that are provided in the AHU 20. The actuator control unit 30a has a function of controlling each actuator provided in the AHU 20 on the basis of each detected temperature output from each of the temperature sensors 11 to 14.

The capacity calculation unit 30b is configured to calculate a capacity required of the AHU 20, in other words, a total demanded capacity [kW], which is the capacity demanded of the entirety of the outdoor units 40A to 40C, in accordance with the load on the AHU 20. The load on the AHU 20 refers to the amount of heat (heating load) that the AHU 20 should supply to the air-conditioned rooms during a heating operation, or the amount of heat (cooling load) that the AHU 20 should remove from the air-conditioned rooms during a cooling operation.

More specifically, the capacity calculation unit 30b is configured to calculate a temperature difference ΔT between the supply temperature detected by the outlet air temperature sensor 11 and a preset set temperature, and calculate, on the basis of the calculated temperature difference ΔT, the total demanded capacity required to cause the supply temperature to reach the set temperature. Further, the capacity calculation unit 30b has a function of calculating a demanded capacity ratio (0% to 100%), which is the ratio of the total demanded capacity with respect to the total capacity [kW] provided by all of the outdoor units 40A to 40C. Additionally, the capacity calculation unit 30b transmits the calculated total demanded capacity and demanded capacity ratio to a number-of-units control unit 54 of the parent interface 50A. The total capacity provided by all of the outdoor units 40A to 40C refers to the total of the individual maximum operating capacities of the respective outdoor units 40A to 40C. In other words, the capacity of the outdoor unit 40 is the maximum operating capacity that can be exhibited by the outdoor unit 40.

When calculating the total demanded capacity, the capacity calculation unit 30b may use the detected temperature detected by the indoor temperature sensor 13 instead of the detected temperature detected by the outlet air temperature sensor 11. In other words, the capacity calculation unit 30b may also be configured to calculate the total demanded capacity on the basis of the temperature difference between a temperature, for example, the outlet air temperature or the return air temperature detected by the indoor temperature sensor 13, and a set temperature.

The communication unit 30c is configured to conduct communication processing to/from the BMS 10 and the parent interface 50A. In other words, the communication unit 30c is configured to conduct processing such as receiving information about a ventilation amount, set temperature, or the like from the BMS 10 and transmitting the total demanded capacity generated by the capacity calculation unit 30b to the parent interface 50A.

The AHU controller 30 may be configured by hardware such as a circuit device that realizes the functions of the AHU controller 30, and may also be configured by a computational device such as a microcontroller or a CPU, and software executed on the computational device.

As illustrated in Fig. 3, the outdoor unit 40A includes the compressor 43, a four-way valve 44, the outdoor heat exchanger 45, and the pressure-reducing device 46. In Embodiment 1, the outdoor units 40A to 40C all have a similar configuration. In other words, each of the plurality of outdoor units 40A to 40C includes the compressor 43, the four-way valve 44, the outdoor heat exchanger 45, and the pressure-reducing device 46.

Further, as illustrated in Fig. 1, each of the plurality of outdoor units 40A to 40C includes an actuator control unit 41 configured to control the actuators of components such as the compressor 43, the four-way valve 44, and the pressure-reducing device 46, and a communication unit 42 configured to conduct communication processing to/from the parent interface 50A or the plurality of child interfaces 50B and 50C.

The compressor 43 is capable of changing an operating frequency with an inverter, and is configured to compress refrigerant. The four-way valve 44 is configured to switch the flow channels of refrigerant. During the heating operation, the four-way valve 44 is switched so that gas refrigerant discharged from the compressor 43 flows into the heat exchanger 25, as illustrated in Fig. 3. Refrigerant that has flowed into the heat exchanger 25 and exchanged heat with air flowing through the first flow channel 71 passes through the pressure-reducing device 46, the outdoor heat exchanger 45, and the four-way valve 44, and is suctioned into the compressor 43. Further, during the cooling operation, the four-way valve 44 is switched so that gas refrigerant discharged from the compressor 43 flows into the outdoor heat exchanger 45 (see the dashed lines in Fig. 3).

The outdoor heat exchanger 45 is formed of a fin-and-tube heat exchanger, for example, and is configured to exchange heat between outdoor air (air) that acts as a heat medium, and refrigerant. The pressure-reducing device 46 is formed of an electronic expansion valve, for example, and is configured to depressurize highpressure refrigerant flowing in from the heat exchanger 25 or the outdoor heat exchanger 45.

In addition, in each of the outdoor units 40A to 40C, the compressor 43, the four-way valve 44, the outdoor heat exchanger 45, and the pressure-reducing device 46 are connected to the heat exchanger 25 of the AHU 20 by refrigerant pipes, thereby constituting a refrigerant circuit for each of the heat pump cycles 100A to 100C through which refrigerant circulates. By switching the four-way valve 44 as described above, each refrigerant circuit configured in this way becomes a heating circuit or a cooling circuit.

In a heating circuit (the state illustrated in Fig. 3), the heat exchanger 25 functions as a condenser, while the outdoor heat exchanger 45 functions as an evaporator. With this arrangement, heated air is supplied to the space inside the construction, and the heating operation is conducted. In a cooling circuit, the outdoor heat exchanger 45 functions as a condenser, while the heat exchanger 25 functions as an evaporator. With this arrangement, cooled air is supplied to the space inside the construction, and the cooling operation is conducted.

The flow rate of refrigerant passing through the heat exchanger 25 is adjusted to satisfy a temperature- or capacity-related demand from the AHU controller 30 by the actuator control unit 41 provided in each of the plurality of outdoor units 40A to 40C controlling the compressor 43 and the pressure-reducing device 46.

The refrigerant circuit in each of the heat pump cycles 100A to 100C is not limited to the configuration exemplified in Fig. 2 and Fig. 3, and it is sufficient for the refrigerant circuit to include at least the compressor 43, a heat exchanger that functions as a condenser, the pressure-reducing device 46, and a heat exchanger that acts as an evaporator.

In Embodiment 1, there is supposed a case in which the BMS 10, the AHU 20, and the AHU controller 30, and the outdoor units 40A to 40C in the air-conditioning system 90 are products from mutually different manufacturers. Thus, in order to enable the information communication between equipment from different manufacturers, the air-conditioning system 90 includes a number of interfaces 50 equal to the number of the plurality of outdoor units 40A to 40C.

The parent interface 50A is configured to relay information communication between the AHU controller 30 and each of the outdoor units 40A to 40C. The child interface 50B is connected to the outdoor unit 40B, and is configured to relay information communication between the AHU controller 30 and the outdoor unit 40B through the parent interface 50A. The child interface 50C is connected to the outdoor unit 40C, and is configured to relay information communication between the AHU controller 30 and the outdoor unit 40C through the parent interface 50A. The plurality of child interfaces 50B and 50C are configured to receive control commands from the number-of-units control unit 54 of the parent interface 50A, and to perform operations related to number-of-units control described later.

The parent interface 50A includes an outdoor unit control unit 51A, a communication unit 52A, a model information acquisition unit 53A, and the number-of-units control unit 54. The outdoor unit control unit 51A is configured to control the operating state (operating or stopped) of the outdoor unit 40A. The outdoor unit control unit 51A also has a function of detecting an abnormality in the outdoor unit 40A.

The communication unit 52A is configured to conduct communication processing between the AHU controller 30 and the outdoor unit 40A, and has a function of enabling the information communication between equipment from different manufacturers. The model information acquisition unit 53A is configured to conduct information communication to/from the outdoor unit 40A, and acquire model information about the outdoor unit 40A. The model information acquisition unit 53A is also configured to transmit the acquired model information about the outdoor unit 40A to the number-of-units control unit 54.

The number-of-units control unit 54 is configured to conduct number-of-units control, which determines the number of units to be operated from among the plurality of outdoor units 40A to 40C and the operating frequency of the compressor 43 included in the outdoor units 40 to be operated, in accordance with the load on the AHU 20 and the individual capacity of each of the outdoor units 40A to 40C, and which drives the compressor 43 according to the determined operating frequency.

The child interface 50B includes an outdoor unit control unit 51B configured to control the operating state of the outdoor unit 40B, a communication unit 52B configured to conduct communication processing between the AHU controller 30 and each of the outdoor units 40A to 40C, and a model information acquisition unit 53B configured to conduct information communication to/from the outdoor unit 40B to acquire model information about the outdoor unit 40B. The outdoor unit control unit 51B also has a function of detecting an abnormality in the outdoor unit 40B. The communication unit 52B has a function of enabling the information communication between equipment from different manufacturers. The model information acquisition unit 53B is configured to transmit the acquired model information about the outdoor unit 40B to the number-of-units control unit 54.

The child interface 50C includes an outdoor unit control unit 51C configured to control the operating state of the outdoor unit 40C, a communication unit 52C configured to conduct communication processing between different equipment, and a model information acquisition unit 53C configured to conduct information communication to/from the outdoor unit 40C to acquire model information about the outdoor unit 40C. The outdoor unit control unit 51C also has a function of detecting an abnormality in the outdoor unit 40C. The communication unit 52C has a function of enabling the information communication between equipment from different manufacturers. The model information acquisition unit 53C is configured to transmit the acquired model information about the outdoor unit 40C to the number-of-units control unit 54. Model information about the outdoor unit 40 is information related to the capacity of the outdoor unit 40.

At this point, in Embodiment 1, the configuration related to the number-of-units control handled by the number-of-units control unit 54 of the parent interface 50A is described in further detail. The number-of-units control unit 54 is configured to perform number-of-units control every time there is a change in the total demanded capacity and the demanded capacity ratio that are received from the AHU controller 30. In addition, the number-of-units control unit 54 is also configured to execute number-of-units control in the case in which an abnormality occurs in at least one of the plurality of outdoor units 40A to 40C.

The number-of-units control unit 54 ascertains the load on the AHU 20 from the total demanded capacity output from the capacity calculation unit 30b of the AHU controller 30. Additionally, the number-of-units control unit 54 receives the individual capacities of the outdoor units 40A to 40C from the model information acquisition units 53A to 53C, respectively. With this arrangement, model information about each of the outdoor units 40A to 40C is aggregated in the number-of-units control unit 54, and the number-of-units control unit 54 ascertains information such as the total number of connected outdoor units 40 and the total capacity of the outdoor units 40.

In other words, the number-of-units control unit 54 is configured to, on the basis of the total demanded capacity output from the capacity calculation unit 30b and the individual capacities of the outdoor units 40A to 40C acquired through the model information acquisition units 53A to 53C, select at least one outdoor unit 40 to be operated, and to determine the operating frequency of the compressor 43 included in the selected outdoor unit 40. Fig. 1 and Fig. 2 exemplify a case in which there are choices of three outdoor units 40 to be operated.

More specifically, the number-of-units control unit 54 is configured to, on the basis of the total demanded capacity output from the capacity calculation unit 30b, calculate a total required capacity, which is the operating capacity to be exhibited by the outdoor units 40A to 40C as a whole. Subsequently, the number-of-units control unit 54 is configured to calculate the required capacity, which is the operating capacity to be exhibited individually by each of the outdoor units 40A to 40C, in accordance with the individual capacities of the outdoor units 40A to 40C to determine the operating frequency of each compressor 43 to satisfy each calculated required capacity.

In addition, the number-of-units control unit 54 has a function of comparing the individual capacities of the outdoor units 40A to 40C on the basis of the model information about each of the outdoor units 40A to 40C acquired through each of the model information acquisition units 53A to 53C. Subsequently, when the comparison result indicates that outdoor units 40 of the same capacity exist, the number-of-units control unit 54 sets a priority ranking so that the outdoor unit 40 that includes the compressor 43 having a short cumulative operating time is preferentially operated, and selects the outdoor unit 40 to be operated by following the set priority ranking.

More specifically, the number-of-units control unit 54 has a function by which, in the case in which two outdoor units 40 of the same capacity exist, the number-of-units control unit 54 attaches a tag in software or the like to the outdoor unit 40 that includes the compressor 43 having a short cumulative operating time, thereby distinguishing that outdoor unit 40 from the other outdoor unit 40. With this arrangement, the number-of-units control unit 54 sets a higher priority ranking to the outdoor unit 40 that includes the compressor 43 having a short cumulative operating time. Further, the number-of-units control unit 54 has a function by which, in the case in which three or more outdoor units 40 of the same capacity exist, a tag or the like is attached in software to thereby distinguish the outdoor units 40 in order from the included compressor 43 having the shortest cumulative operating time. With this arrangement, the number-of-units control unit 54 sets a higher priority ranking to the outdoor units 40 in order from the included compressor 43 having the shortest cumulative operating time.

Further, the number-of-units control unit 54 has a function of operating all of the plurality of outdoor units 40A to 40C at respective certain ratios in the case in which the load on the AHU 20 is excessively large, in other words, in the case in which the outdoor temperature is lower than a certain temperature during the heating operation, or in the case in which the outdoor temperature is higher than a certain temperature during the cooling operation. In other words, in the case in which the load on the AHU 20 is not excessively large, the number-of-units control unit 54 executes the number-of-units control described above, in other words, number-of-units control in a normal operating mode, whereas in the case in which the load on the AHU 20 is excessively large, the number-of-units control unit 54 executes number-of-units control in an all-unit operating mode.

Specifically, during the heating operation, in the case in which the temperature detected by the outdoor temperature sensor 14 is less than or equal to a preset low reference temperature (for example, -10 degrees C), the AHU controller 30 transmits to the number-of-units control unit 54 low outdoor temperature information indicating a low outdoor temperature. Further, during the cooling operation, in the case in which the temperature detected by the outdoor temperature sensor 14 is equal to or greater than a preset high reference temperature (for example, 40 degrees C), the AHU controller 30 transmits to the number-of-units control unit 54 high outdoor temperature information indicating a high outdoor temperature.

Subsequently, in the case of receiving low outdoor temperature information or high outdoor temperature information from the AHU controller 30, the number-of-units control unit 54 switches to the all-unit operating mode that operates all of the plurality of outdoor units 40A to 40C, and calculates the required capacity for each of the outdoor units 40A to 40C in accordance with the individual capacities of the outdoor units 40A to 40C.

However, the number-of-units control unit 54 may also directly acquire the temperature detected by the outdoor temperature sensor 14. Further, the outdoor temperature sensor 14 may be attached to the outdoor unit 40, and the number-of-units control unit 54 may acquire the temperature detected by the outdoor temperature sensor 14 from the outdoor unit 40. Additionally, in the case in which the temperature detected by the outdoor temperature sensor 14 is less than or equal to the low reference temperature during the heating operation, or equal to or greater than the high reference temperature during the cooling operation, the number-of-units control unit 54 may switch to the all-unit operating mode that operates all of the plurality of outdoor units 40A to 40C.

In the above, -10 degrees C is given as an example of the low reference temperature and 40 degrees C is given as an example of the high reference temperature, but the low reference temperature and the high reference temperature are not limited thereto, and may be changed appropriately in accordance with the installation environment or other conditions.

Further, on the basis of model information about each of the outdoor units 40A to 40C, the number-of-units control unit 54 generates number-of-units control information in which the total capacity provided by all of the outdoor units 40A to 40C, the number of operating outdoor units 40, and the operating frequency of the compressor 43 included in each of the outdoor units 40 to be operated are associated together. The number-of-units control information is formed of table information in which the total capacity provided by all of the outdoor units 40A to 40C, the number of operating outdoor units 40, and the operating frequency of the compressor 43 included in each of the outdoor units 40 to be operated are associated together, for example, and the number-of-units control unit 54 generates the table information in an internal memory (not shown) or the like.

Additionally, the number-of-units control unit 54 determines the operating frequency of the compressor 43 included in each outdoor unit 40 that is caused to operate, on the basis of the calculated individual required capacity for each of the outdoor units 40A to 40C and the number-of-units control information. The number-of-units control information may also be configured to include the operating frequency of the compressor 43 included in each outdoor unit 40 that is not caused to operate.

Subsequently, the number-of-units control unit 54 specifies the required timings of the operation of each of the outdoor units 40A to 40C on the basis of the total demanded capacity from the AHU controller 30, and drives the selected compressor 43 at the specified timings. In other words, the number-of-units control unit 54 is configured to transmit to the outdoor unit control units 51A to 51C a driving control command including information about the operating frequency and the timing at which to operate each of the compressors 43 respectively included in the outdoor units. After receiving the driving control command from the number-of-units control unit 54, each of the outdoor unit control units 51A to 51C is configured to transmit an operation command including the operating frequency of the compressor 43 to the actuator control unit 41 of the connected outdoor units 40A to 40C when the required timing of the operation of the respectively connected outdoor units 40A to 40C is reached. Each actuator control unit 41 follows the operation command transmitted from the outdoor unit control units 51A to 51C, and drives the compressor 43 with the operating frequency specified in the operation command.

The number-of-units control unit 54, the outdoor unit control units 51A to 51C, and the model information acquisition units 53A to 53C may be configured by hardware such as a circuit device that realizes the functions of those units, and may also be configured by a computational device, for example, a microcontroller or a CPU, and software executed on the computational device.

Further, the parent interface 50A and the plurality of child interfaces 50B and 50C may be differentiated by adopting respectively different configurations. Further, the parent interface 50A and the plurality of child interfaces 50B and 50C may have the same configuration, with parent and child being differentiated by using a toggle switch or other element.

As described above, the air-conditioning system 90 includes the plurality of heat pump cycles 100A to 100C, which are formed of the outdoor units 40A to 40C and the heat exchanger 25 included in the AHU 20, as a heat source. In addition, the number-of-units control unit 54 is configured to select at least one outdoor unit 40 to be operated in accordance with the load on the AHU 20 and the individual capacities of the outdoor units 40A to 40C, determine the operating frequency of the compressor 43 included in the selected outdoor unit 40, and control the driving of the compressor 43. For this reason, according to the air-conditioning system 90, it is possible to reduce the frequency of the on-off cycle operation of the compressor 43, and improve the reliability of the system.

Meanwhile, Fig. 1 and Fig. 2 exemplify a case in which the connected number of outdoor units 40 and interfaces 50 is three each, but the configuration is not limited thereto, and the air-conditioning system 90 may also include an arbitrary number of outdoor units 40 and a corresponding number of interfaces. In other words, in the air-conditioning system 90, the connected number of outdoor units 40 and interfaces 50 may be less than three, or four or more.

Further, the plurality of outdoor units 40 may be configured by combining outdoor units of the same capacity, or by combining outdoor units of different capacities, such as combining two outdoor units each having a capacity of 10 kW with one outdoor unit having a capacity of 5 kW, for example. Outdoor units of the same capacity refer to outdoor units for which the maximum operating capacity of one unit is the same. However, the plurality of outdoor units 40 may also have respectively different capacities. In other words, the capacities of all of the outdoor units 40 may be different from each other. Moreover, the air-conditioning system 90 may also not include the BMS 10.

Next, operations related to number-of-units control in the air-conditioning system 90 of Embodiment 1 are described. The basic concept of number-of-units control includes the following four points.
(1) Minimize the number of operating outdoor units 40.
(2) Among the outdoor units 40 connected to the interfaces 50, operate the outdoor units 40 of lower capacity to satisfy the total demanded capacity.
(3) Monitor the cumulative operating time of each compressor 43, and select the outdoor units 40 to be operated so that the cumulative operating times of the respective compressors 43 become uniform.
(4) Exclude from the target of number-of-units control an outdoor unit 40 in which an abnormality has occurred.
(5) Avoid operating the compressor 43 at the maximum operating frequency.

The control according to (1) and (2) above is for extending the lifetime of each compressor 43 by reducing the number of operating compressors 43 respectively included in the outdoor units 40A to 40C.

The control according to (3) is for extending the lifetime of the air-conditioning system 90 as a whole by avoiding continual operation of a specific compressor 43 and attempting to equalize the lifetimes of the respective compressors 43.

The control according to (4) is for blocking operation requests to an outdoor unit 40 in an abnormal state so that the outdoor unit 40 in which an abnormality has occurred is not caused to keep operating, thereby preemptively avoiding further deterioration of the affected outdoor unit 40 and secondary damage or the like.

The control according to (5) is for avoiding operation in a state in which the load on each compressor 43 is raised to the maximum limit, in consideration of the generally known fact that the performance of a compressor 43 falls when the compressor 43 is driven at the maximum operating frequency.

In other words, according to the air-conditioning system 90, by executing number-of-units control in accordance with (1) to (5) above, the reliability of the air-conditioning system 90 can be improved.

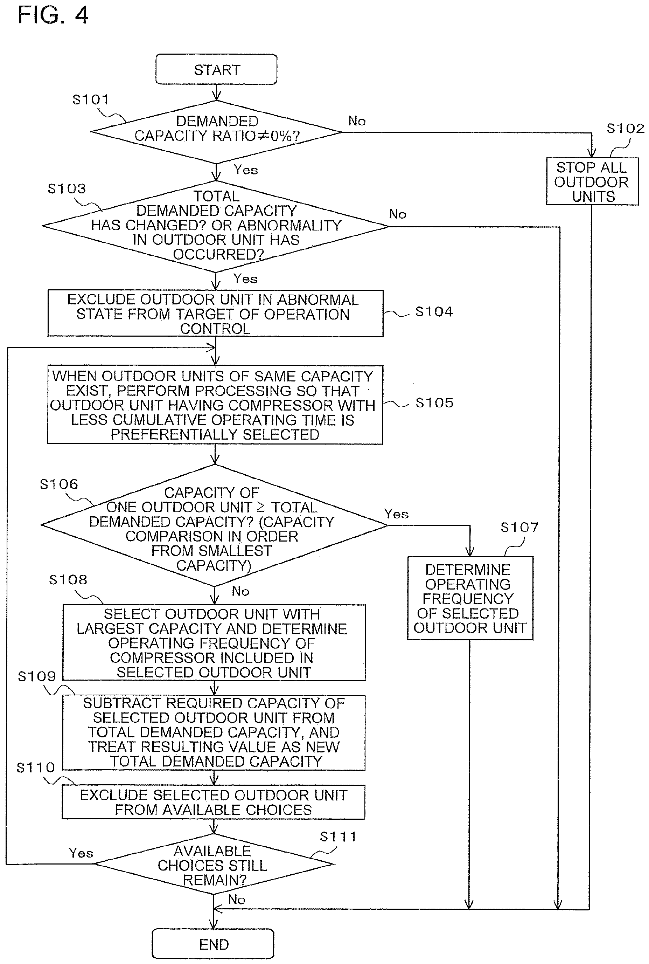

Fig. 4 is a flowchart for illustrating operations related to number-of-units control of the air-conditioning system 90 in Embodiment 1 of the present invention. Following Fig. 4, a flow in a normal operating mode is described in detail as part of a series of number-of-units control processing in which the number-of-units control unit 54 selects which outdoor units 40 to be operated or stopped, and determines the operating frequency at which to drive the compressor 43 included in each outdoor unit 40 that is caused to operate.

First, the number-of-units control unit 54 determines whether or not the demanded capacity ratio received from the AHU controller 30 is 0% (Fig. 4: Step S101). When the demanded capacity ratio is 0% (Fig. 4: Step S101 /No), the number-of-units control unit 54 stops all of the connected outdoor units 40A to 40C. In other words, the number-of-units control unit 54 transmits an operation stop command to each of the outdoor unit control units 51A to 51C, and in accordance with the operation stop command, each of the outdoor unit control units 51A to 51C stops the corresponding one of the outdoor units 40A to 40C (Fig. 4: Step S102).

On the other hand, when the demanded capacity ratio is not 0% (Fig. 4: Step S101/Yes), the number-of-units control unit 54 determines whether or not the total demanded capacity received from the AHU controller 30 has changed, and also whether or not an abnormality has occurred in any of the outdoor units 40A to 40C (Fig. 4: Step S103).

When there is no change in the total demanded capacity and an abnormality has not occurred in any of the outdoor units 40A to 40C, the number-of-units control unit 54 ends number-of-units control, and maintains the current operating state of each of the outdoor units 40A to 40C (Fig. 4: Step S103/No). On the other hand, in the case in which there is a change in the total demanded capacity, or in the case in which an abnormality occurs in the outdoor units 40A to 40C (Fig. 4: Step S103/Yes), the number-of-units control unit 54 proceeds to Step S104.

Next, in the case in which an abnormality has not occurred in the outdoor units 40A to 40C, when there is a change in the total demanded capacity, the number-of-units control unit 54 proceeds directly to Step S105. Meanwhile, when an abnormality has occurred in the outdoor units 40A to 40C, the number-of-units control unit 54 excludes the outdoor unit 40 with the abnormality from the target of number-of-units control (Fig. 4: Step S104).

Step S104 corresponds to control according to (4) above. In other words, in Step S104, the number-of-units control unit 54 performs processing so that operating demands on the outdoor unit 40 in an abnormal state are not continued, thereby preemptively avoiding further deterioration of the affected outdoor unit 40 and secondary damage or the like.

Next, on the basis of the model information about each of the outdoor units 40A to 40C acquired through the model information acquisition units 53A to 53C, the number-of-units control unit 54 compares the individual capacities of the outdoor units 40A to 40C to one another, and when outdoor units 40 of the same capacity exist, the number-of-units control unit 54 performs processing so that the outdoor unit 40 including the compressor 43 having a short cumulative operating time is preferentially selected (Fig. 4: Step S105).

Step S105 corresponds to control according to (3) above. In other words, in Step S105, the number-of-units control unit 54 performs processing to preferentially operate the outdoor unit 40 including the compressor 43 having a short cumulative operating time, and thus the cumulative operating times of the respective compressors 43 can be equalized, and the lifetime of the air-conditioning system 90 as a whole can be extended.

The number-of-units control unit 54 executes the processing in Step S105 in unit intervals of a fixed time, such as in 10-hour units or 100-hour units. In other words, in the number-of-units control at a certain time, when a priority ranking is set for outdoor units 40 of the same capacity, the number-of-units control unit 54 omits the processing in Step S105 until the preset fixed time elapses.

Hypothetically, if the processing in Step S105 is conducted every time number-of-units control is conducted without setting a unit of fixed time, then every time there is a change in the total demanded capacity from the AHU controller 30, the relative lengths of the cumulative operating times of the respective compressors 43 change places, which may result in a state in which the outdoor units 40 to be operated change. If such a state occurs and there is an increase in the number of times that the on-off switching processing of each compressor 43 is executed, the lifetime of each compressor 43 is shortened. Such a state occurs easily in particular in the case in which the cumulative operating times are close in outdoor units 40 of the same capacity.

Regarding this point, according to the air-conditioning system 90, since the number-of-units control unit 54 conducts the processing of Step S105 in unit intervals of a fixed time, the execution frequency of the on-off switching processing of each compressor 43 can be reduced, and thus the lifetime of each compressor 43 can be extended even further.

Next, for each of the outdoor units 40A to 40C which are available choices, the number-of-units control unit 54 compares the capacity of the outdoor unit 40 to the total demanded capacity one unit at a time in order from smallest capacity, and determines whether or not an outdoor unit 40 having a capacity equal to or greater than the total demanded capacity exists (Fig. 4: Step S106). In other words, when the result of successively comparing the capacity of each single outdoor unit 40 to the total demanded capacity is that an outdoor unit 40 having a capacity equal to or greater than the total demanded capacity exists, the number-of-units control unit 54 selects that outdoor unit 40 (Fig. 4: Step S106/Yes). Subsequently, the number-of-units control unit 54 calculates the required capacity for the selected outdoor unit 40, and determines the operating frequency of the compressor 43 included in the selected outdoor unit 40 to satisfy the calculated required capacity. The required capacity at this point corresponds to the total demanded capacity. Subsequently, the number-of-units control unit 54 drives the compressor 43 included in the selected outdoor unit 40 at the determined operating frequency (Fig. 4: Step S107).

More specifically, first, the number-of-units control unit 54 compares the capacity of the outdoor unit 40 with the smallest capacity to the total demanded capacity, and when the capacity of that outdoor unit 40 is equal to or greater than the total demanded capacity, the number-of-units control unit 54 selects that outdoor unit 40 (Fig. 4: Step S106/Yes). On the other hand, in the case in which the capacity of the outdoor unit 40 with the smallest capacity is less than the total demanded capacity, the number-of-units control unit 54 compares the capacity of the outdoor unit 40 with the next smallest capacity to the total demanded capacity, and when the capacity of that outdoor unit 40 is equal to or greater than the total demanded capacity, the number-of-units control unit 54 selects that outdoor unit 40 (Fig. 4: Step S106/Yes). In this way, the number-of-units control unit 54 compares the capacity of each outdoor unit 40 to the total demanded capacity one unit at a time in order from smallest capacity from among the available choices until an outdoor unit 40 having a capacity equal to or greater than the total demanded capacity can be selected. The processing in Step S106 corresponds to control according to (2) above.

Additionally, when the result of comparing the individual capacities of all of the outdoor units 40A to 40C to the total demanded capacity is that no outdoor unit 40 has a capacity satisfying the total demanded capacity, and the number-of-units control unit 54 determines that an outdoor unit 40 having a capacity equal to or greater than the total demanded capacity does not exist (Fig. 4: Step S106/No), the number-of-units control unit 54 selects the outdoor unit 40 with the largest capacity from among the available choices. Further, the number-of-units control unit 54 determines the operating frequency of the compressor 43 included in the selected outdoor unit 40 (Fig. 4: Step S108).

Step S108 corresponds to control according to (1) above. In other words, when an outdoor unit 40 having a capacity equal to or greater than the total demanded capacity does not exist, the number-of-units control unit 54 selects the outdoor unit 40 with the largest capacity, and thus the number of operating outdoor units 40 can be minimized.

In Step S108, in the case in which the total demanded capacity from the AHU controller 30 is greater than a value of A% of the total capacity of all of the outdoor units 40A to 40C, in other words, in the case in which the load on the AHU 20 is higher than a fixed amount, the number-of-units control unit 54 sets the operating frequency of the compressor 43 included in the outdoor unit 40 having the largest capacity to a maximum value. In other words, the number-of-units control unit 54 sets the required capacity of the outdoor unit 40 having the largest capacity to the value of 100% of the capacity of that outdoor unit 40.

The value of A% of the total capacity provided by all of the outdoor units 40A to 40C is referred to as "upper limit threshold value". Further, A% used when determining the upper limit threshold value is referred to as "upper limit ratio". The upper limit ratio is preset as a reference for determining whether the load on the AHU 20 is high or low. The upper limit ratio may be set using the operating capacity at which the performance of the outdoor unit 40 starts to drop as a reference.

Meanwhile, in Step S108, in the case in which the total demanded capacity is less than or equal to the upper limit threshold value, the number-of-units control unit 54 limits the required capacity of the selected outdoor unit 40 to a value of A% of the capacity of that outdoor unit 40. In other words, in the case in which the total demanded capacity is less than or equal to the upper limit threshold value, the number-of-units control unit 54 calculates the value of A% of the capacity of the outdoor unit 40 having the largest capacity as the required capacity, and determines the operating frequency of the compressor 43 included in that outdoor unit 40 to exhibit the calculated required capacity. In this way, in the air-conditioning system 90, since the number-of-units control unit 54 conducts control according to (5) above, operation of each compressor 43 at the maximum operating frequency can be avoided. In other words, according to the air-conditioning system 90, the operating frequency of each compressor 43 can be reduced, and each compressor 43 can be driven in an appropriate state.

Proceeding to Step S107 means that the total demanded capacity can be satisfied with a single outdoor unit 40. On the other hand, proceeding to Step S108 means that the total demanded capacity cannot be satisfied with a single outdoor unit 40, in other words, it is necessary to operate two or more outdoor units 40.

Next, the number-of-units control unit 54 subtracts the required capacity of the outdoor unit 40 selected in Step S108 from the total demanded capacity from the AHU controller 30, and treats the resulting value as a new total demanded capacity (Fig. 4: Step S109). Subsequently, the number-of-units control unit 54 excludes the outdoor unit 40 selected in Step S108 from the available choices (Fig. 4: Step S110).

Next, the number-of-units control unit 54 determines whether or not any available choices still remain (Fig. 4: Step S111). In the case of determining that no available choices still remain (Fig. 4: Step S111/No), the number-of-units control unit 54 ends the calculations related to number-of-units control, and drives the compressor 43 included in the outdoor unit 40 selected in Step S108 at the determined operating frequency.

On the other hand, in the case of determining that an available choice still remains (Fig. 4: Step S111/Yes), the number-of-units control unit 54 returns to Step S105 and executes the processing of selecting an outdoor unit 40 and the processing of determining the operating frequency of the compressor 43. In other words, the number-of-units control unit 54 executes the processing from Step S105 to Step S111 similarly to the above.

Specifically, when returning to Step S105 from Step S111, in the case in which outdoor units 40 of the same capacity exist among the available choices from which the outdoor unit 40 selected first has been excluded, the number-of-units control unit 54 performs the processing so that the outdoor unit 40 that includes the compressor 43 having a short cumulative operating time is preferentially selected. After that, in Step S106, the number-of-units control unit 54 compares the capacity of each outdoor unit 40 to the new total demanded capacity one unit at a time in order from smallest capacity among the available choices, similarly to when the first outdoor unit 40 was selected. Subsequently, on the basis of the comparison results, the number-of-units control unit 54 selects the second outdoor unit 40 to be operated.

The case in which the number-of-units control unit 54 selects an outdoor unit 40 having a capacity equal to or greater than the new total demanded capacity in Step S106 and thus the processing proceeds to Step S107 means that the original total demanded capacity output from the AHU controller 30 can be satisfied with two outdoor units 40. In Step S107, the number-of-units control unit 54 determines the operating frequency of the compressor 43 included in the selected outdoor unit 40, similarly to the case of the first outdoor unit 40.

On the other hand, the case in which an outdoor unit 40 having a capacity equal to or greater than the new total demanded capacity does not exist in Step S106 and thus the processing proceeds to Step S108 means that three or more outdoor units 40 are required to satisfy the original total demanded capacity output from the AHU controller 30.

In Step S108, the number-of-units control unit 54 selects the outdoor unit 40 with the second-largest capacity from among the outdoor units 40A to 40C as the second outdoor unit 40, and determines the operating frequency of the compressor 43 included in the selected outdoor unit 40 similarly to the case of the first outdoor unit 40.

Subsequently, the number-of-units control unit 54 subtracts the required capacity of the outdoor unit 40 selected second from the total demanded capacity newly set in Step S109, treats the resulting value as the new total demanded capacity, and excludes the outdoor unit 40 selected second from the available choices.

Thereafter, in the case in which three or more outdoor units 40 are required to satisfy the original total demanded capacity output from the AHU controller 30, in other words, in the case of returning to Step S105 from Step S111 yet again, the number-of-units control unit 54 executes the processing of selecting an outdoor unit 40 and the processing of determining the operating frequency of the compressor 43 according to the processing similar to the above.

The above description of Step S106 exemplifies a case in which the number-of-units control unit 54 uses the total demanded capacity output from the AHU controller 30 as the target of comparison with the capacity of a single outdoor unit 40, but the number-of-units control unit 54 may also use a total required capacity calculated on the basis of the total demanded capacity as the target of comparison, for example. Additionally, in Step S109, the number-of-units control unit 54 may subtract the required capacity of the selected outdoor unit 40 from the total required capacity to calculate the new total required capacity.

Meanwhile, in the number-of-units control calculations, the number-of-units control unit 54 imposes a limit on the minimum value of the total operating capacity, which is the total of the operating capacities respectively exhibited by the plurality of outdoor units 40A to 40C. In other words, the number-of-units control unit 54 calculates the individual required capacities of the outdoor units 40A to 40C so that the total operating capacity for accommodating the load on the AHU 20 does not fall below a value of B% of the total capacity provided by all of the outdoor units 40A to 40C.

The value of B% of the total capacity provided by all of the outdoor units 40A to 40C is referred to as "lower limit threshold value". Further, B% used to determine the lower limit threshold value is referred to as "lower limit ratio". The lower limit ratio is determined on the basis of the number of outdoor units 40 whose combination is actually allowed, and the capacity of each outdoor unit 40. In other words, the lower limit ratio is determined so that the ratio of the mismatch between the capacity of the heat exchanger 25 of the AHU 20 and the required capacity of the outdoor unit 40 falls within an allowable range, which is a range in which a stable operating state of the compressor 43 can be maintained.

For example, when there are many outdoor units 40 connected to the AHU 20, and the total demanded capacity from the AHU controller 30 is small, the compressor 43 included in an outdoor unit 40 of extremely low capacity is driven alone at a minimum operating frequency with respect to the heat exchanger 25 of the AHU 20. In other words, in such a case, unless a limit is imposed on the minimum value of the total operating capacity, the ratio of the mismatch between the capacity of the heat exchanger 25 and the required capacity of the outdoor unit 40 increases, thereby causing the air-conditioning system 90 to enter a state that is significantly distant from the anticipated operating state, and causing the compressor 43 to enter an unstable operating state.

Regarding this point, in Embodiment 1, since the lower limit threshold value is imposed in advance as described above, the ratio of the mismatch between the capacity of the heat exchanger 25 and the required capacity of the outdoor unit 40 does not increase to exceed the allowable range, and thus a stable operating state of the compressor 43 can be maintained.

In a case such as when the minimum capacity of the outdoor unit 40 with the smallest capacity is large to some degree, and the ratio of the mismatch between the capacity of the heat exchanger 25 of the AHU 20 and the required capacity of the outdoor unit 40 falls within the allowable range, a limit may also not be imposed on the minimum value of the total operating capacity.

In addition, in Step S101 of Fig. 4, for example, the number-of-units control unit 54 may determine whether or not the demanded capacity ratio is 0%, and may also determine whether or not the demanded capacity ratio is 100%. Subsequently, in the case in which the demanded capacity ratio is 100%, the number-of-units control unit 54 may operate all of the outdoor units 40A to 40C at 100% capacity. In other words, in the case in which the demanded capacity ratio received from the AHU controller 30 is 100%, the number-of-units control unit 54 may set the operating frequency of all of the compressors 43 included in the outdoor units 40A to 40C to the maximum value.

Meanwhile, when the load on the AHU 20 is excessively large and yet the ratio of the mismatch between the capacity of the heat exchanger 25 of the AHU 20 and the required capacity of the outdoor unit 40 is large, the compressor 43 easily falls into an unstable operating state.

Accordingly, although not shown in Fig. 4, at the time of a low outdoor temperature during the heating operation and at the time of a high outdoor temperature during the cooling operation, the number-of-units control unit 54 switches to an all-unit operating mode, and operates all of the plurality of outdoor units 40A to 40C at respective certain ratios. In other words, in the case in which the outdoor temperature is less than or equal to the low reference temperature during the heating operation, and in the case in which the outdoor temperature is equal to or greater than the high reference temperature during the cooling operation, the number-of-units control unit 54 calculates respective required capacities in accordance with the individual capacities of the respective outdoor units 40A to 40C, and operates each of the outdoor units 40A to 40C so that each calculated required capacity is exhibited.

The AHU controller 30 or the number-of-units control unit 54 may also determine whether or not the outdoor temperature is less than or equal to the low reference temperature, or equal to or greater than the high reference temperature, before Step S103 above, for example. Further, the AHU controller 30 or the number-of-units control unit 54 may acquire the outdoor temperature continuously or at fixed time intervals, and when the outdoor temperature becomes less than or equal to the low reference temperature, or equal to or greater than the high reference temperature, the number-of-units control unit 54 may switch to the all-unit operating mode. Additionally, while executing number-of-units control during the all-unit operating mode, when the outdoor temperature becomes equal to or greater than the low reference temperature, or less than or equal to the high reference temperature, the number-of-units control unit 54 may switch to the normal operating mode.

In this way, the air-conditioning system 90 switches the operating mode of number-of-units control with the number-of-units control unit 54 in accordance with the outdoor temperature, and thus when the air conditioning load is expected to be excessively large, a stable operating state of the compressor 43 can be maintained, and number-of-units control can be realized within a range that protects the compressor 43.

Table 1 is a table for showing an exemplary calculation of number-of-units control in the normal operating mode by the number-of-units control unit 54. In other words, Table 1 supposes a case in which the outdoor temperature is neither less than or equal to the low reference temperature, nor equal to or greater than the high reference temperature. In the following, the number-of-units control handled by the number-of-units control unit 54 is described more specifically using the specific numerical values indicated in Table 1, with reference to the flowchart illustrated in Fig. 4.

**[Table 1]**

| Total demanded capacity and demanded capacity ratio from AHU controller 30 | | Required capacity of outdoor unit 40A (capacity: 10 kW) | | Required capacity of outdoor unit 40B (capacity: 10 kW) | | Required capacity of outdoor unit 40C (capacity: 5 kW) | |
|---|---|---|---|---|---|---|---|
| [kW] | [%] | [kW] | [%] | [kW] | [%] | [kW] | [%] |
| 0 | 0% | 0 | 0% | 0 | 0% | 0 | 0% |
| 2.5 | 10% | 0 | 0% | 0 | 0% | 2.5 | 50% |
| 5 | 20% | 0 | 0% | 0 | 0% | 5 | 100% |
| 7.5 | 30% | 7.5 | 75% | 0 | 0% | 0 | 0% |
| 10 | 40% | 10 | 100% | 0 | 0% | 0 | 0% |
| 12.5 | 50% | 8 | 80% | 0 | 0% | 4.5 | 90% |
| 15 | 60% | 8 | 80% | 7 | 70% | 0 | 0% |
| 17.5 | 70% | 8 | 80% | 9.5 | 95% | 0 | 0% |
| 20 | 80% | 8 | 80% | 8 | 80% | 4 | 80% |
| 22.5 | 90% | 10 | 100% | 10 | 100% | 2.5 | 50% |
| 25 | 100% | 10 | 100% | 10 | 100% | 5 | 100% |

Table 1 exemplifies a case in which three outdoor units 40A to 40C are connected to the heat exchanger 25 of the AHU 20, the capacity of the outdoor unit 40A is 10 kW, the capacity of the outdoor unit 40B is 10 kW, the capacity of the outdoor unit 40C is 5 kW, and the total capacity provided by all of the outdoor units 40A to 40C is 25 kW. Further, Table 1 exemplifies calculation results for a case in which the upper limit ratio (A%) is set to 80%, and the lower limit ratio (B%) is set to 10%. Further, regarding the cumulative operating times of the outdoor unit 40A and the outdoor unit 40B having the same capacity, it is supposed that the outdoor unit 40A has the shorter cumulative operating time. In addition, it is supposed that an abnormality has not occurred in any of the outdoor units 40A to 40C.

Further, a limit is imposed so that the minimum value of the total operating capacity becomes equal to or greater than the value of B% (the lower limit threshold value) of the total capacity provided by all of the outdoor units 40A to 40C, and thus the number-of-units control unit 54 executes calculations related to number-of-units control within a range of from 10% to 100%. Table 1 exemplifies calculation results in the case of increasing the total demanded capacity 10% at a time.

### (Demanded Capacity Ratio=0%)

In the case in which the demanded capacity ratio received from the AHU controller 30 is 0%, the processing proceeds from Step S101 to Step S102. In other words, the number-of-units control unit 54 stops all of the outdoor units 40A to 40C, and all of the outdoor units 40A to 40C enter a stopped state.

### (Demanded Capacity Ratio=10%)

In the case in which the demanded capacity ratio received from the AHU controller 30 is 10% (the total demanded capacity is 2.5 kW), since there is no abnormality in any of the outdoor units 40A to 40C, the processing proceeds to Step S105 of Fig. 4.

At this point, since the outdoor unit 40A and the outdoor unit 40B have the same capacity (10 kW), in Step S105, the number-of-units control unit 54 compares the cumulative operating times of the outdoor unit 40A and the outdoor unit 40B, and performs processing so that the outdoor unit 40A having the shorter cumulative operating time is preferentially selected.

Next, the processing proceeds to Step S106, and the number-of-units control unit 54 compares the capacities of the outdoor units 40A and 40C to the total demanded capacity in order from smallest capacity, in other words, in the order of the outdoor unit 40C, then the outdoor unit 40A.

More specifically, the number-of-units control unit 54 compares the capacity of the outdoor unit 40C to the total demanded capacity, and since the capacity of the outdoor unit 40C (5 kW) is greater than the total demanded capacity (2.5 kW), the number-of-units control unit 54 selects the outdoor unit 40C, and sets the required capacity of the outdoor unit 40C to 2.5 kW. In other words, the number-of-units control unit 54 proceeds to Step S107 without performing processing of comparing the capacity of the outdoor unit 40A to the total demanded capacity. In Step S107, the number-of-units control unit 54 determines the operating frequency of the compressor 43 included in the outdoor unit 40C at a value satisfying the required capacity set to 2.5 kW.

As described above, in the case in which the total demanded capacity from the AHU controller 30 is 10%, the parent interface 50A cooperates with the child interface 50C connected to the outdoor unit 40C to perform control so that the total demanded capacity, namely, 2.5 kW, is exhibited by the outdoor unit 40C only.

### (Demanded Capacity Ratio=20%)

In the case in which the demanded capacity ratio received from the AHU controller 30 is 20% (the total demanded capacity is 5 kW), the number-of-units control unit 54 performs calculations similarly to the case in which the demanded capacity ratio is 10%, and performs control to satisfy the required capacity of 5 kW with the outdoor unit 40C. In other words, the parent interface 50A cooperates with the child interface 50C connected to the outdoor unit 40C to perform control to drive the compressor 43 included in the outdoor unit 40C at the maximum operating frequency. In this way, in the case in which the total demanded capacity can be satisfied by a single outdoor unit 40, the number-of-units control unit 54 prioritizes control according to the above (1) over control according to the above (5), and performs control to minimize the number of operating outdoor units 40.

### (Demanded Capacity Ratio=30%)

In the case in which the demanded capacity ratio received from the AHU controller 30 is 30% (the total demanded capacity is 7.5 kW), similarly to the case in which the demanded capacity ratio is 10%, the processing proceeds to Step S105, and the number-of-units control unit 54 performs processing so that the outdoor unit 40A is preferentially selected.

Next, the processing proceeds to Step S106, and the number-of-units control unit 54 compares the capacities of the outdoor units 40A and 40C to the total demanded capacity in the order of the outdoor unit 40C, then the outdoor unit 40A. The result of the comparison is that the total demanded capacity can be exhibited with the outdoor unit 40A, and thus the number-of-units control unit 54 selects the outdoor unit 40A.

Next, the processing proceeds to Step S107, and the number-of-units control unit 54 determines the operating frequency of the compressor 43 included in the outdoor unit 40A at a value satisfying the required capacity of 7.5 kW. In other words, the parent interface 50A performs control so that the outdoor unit 40A exhibits the required capacity of 7.5 kW.

### (Demanded Capacity Ratio=40%)

In the case in which the demanded capacity ratio received from the AHU controller 30 is 40% (the total demanded capacity is 10 kW), the number-of-units control unit 54 performs calculations similarly to the case in which the demanded capacity ratio is 30%, and performs control so that the compressor 43 included in the outdoor unit 40C operates at the maximum operating frequency. In this way, in the case in which the total demanded capacity can be satisfied by a single outdoor unit 40, the number-of-units control unit 54 prioritizes control according to the above (1) over control according to the above (5), and performs control to minimize the number of operating outdoor units 40.

### (Demanded Capacity Ratio=50%)

In the case in which the demanded capacity ratio received from the AHU controller 30 is 50% (the total demanded capacity is 12.5 kW), similarly to the case in which the demanded capacity ratio is 30%, the number-of-units control unit 54 proceeds to Step S105, and performs processing so that the outdoor unit 40A is preferentially selected.

Next, the processing proceeds to Step S106, and the number-of-units control unit 54 compares the capacities of the outdoor units 40A and 40C to the total demanded capacity in the order of the outdoor unit 40C, then the outdoor unit 40A. The result of the comparison is that the capacities of both the outdoor unit 40C and the outdoor unit 40A are less than the total demanded capacity, and thus the processing proceeds to Step S108. Since the outdoor unit 40B has the same capacity as the outdoor unit 40A, the number-of-units control unit 54 does not compare the capacity of the outdoor unit 40B to the total demanded capacity.

In Step S108, the number-of-units control unit 54 selects the outdoor unit 40A with a large capacity, and determines the required capacity of the outdoor unit 40A and an operating frequency of the compressor 43 based on the required capacity. At this point, the demanded capacity ratio of 50% is below the upper limit ratio of 80%, and hence the number-of-units control unit 54 sets the required capacity of the outdoor unit 40A while limiting the capacity to 80% (8 kW). Additionally, the number-of-units control unit 54 determines the operating frequency of the compressor 43 so that the outdoor unit 40A satisfies the set required capacity.

Next, the processing proceeds to Step S109, and the number-of-units control unit 54 subtracts the required capacity 8 kW of the selected outdoor unit 40A from the total demanded capacity of 12.5 kW, and treats the resulting value of 4.5 kW as the new total demanded capacity. Subsequently, the processing proceeds to Step S110, and the number-of-units control unit 54 excludes the outdoor unit 40A from the available choices.

Next, since the outdoor unit 40B and the outdoor unit 40C still remain as available choices of outdoor units 40, the processing returns to Step S105 from Step S111. At this point, since the capacity of the outdoor unit 40B and the capacity of the outdoor unit 40C are different from each other (since outdoor units 40 of the same capacity do not exist among the available choices), the processing proceeds directly to Step S106.

In Step S106, the number-of-units control unit 54 compares the capacities of the outdoor units 40B and 40C to the new total demanded capacity (4.5 kW) in the order of the outdoor unit 40C, then the outdoor unit 40B. Subsequently, since the capacity of the outdoor unit 40C (5 kW) is greater than the new total demanded capacity (4.5 kW), the processing proceeds to Step S107.

In Step S107, the number-of-units control unit 54 sets the required capacity of the outdoor unit 40C to the new total demanded capacity of 4.5 kW. Further, the number-of-units control unit 54 determines the operating frequency of the compressor 43 included in the outdoor unit 40C so that the required capacity set to 4.5 kW is satisfied.

As described above, in the case in which the demanded capacity ratio received from the AHU controller 30 is 50%, the parent interface 50A cooperates with the child interface 50C connected to the outdoor unit 40C to perform control so that the outdoor unit 40A exhibits the required capacity of 8 kW and the outdoor unit 40C exhibits the required capacity of 4.5 kW.

### (Demanded Capacity Ratio=60%)

In the case in which the demanded capacity ratio received from the AHU controller 30 is 60% (the total demanded capacity is 15 kW), similarly to the case in which the demanded capacity ratio is 50%, the number-of-units control unit 54 selects the outdoor unit 40A first, and sets the required capacity of the outdoor unit 40A to 80% of its capacity (8 kW). Next, in Step S109, the number-of-units control unit 54 sets the new total demanded capacity to 7 kW (15 kW-8 kW=7 kW).

Next, similarly to the case in which the demanded capacity ratio is 50%, the processing returns to Step S105, and after that, in Step S106, the number-of-units control unit 54 selects the outdoor unit 40B having a capacity greater than the new total demanded capacity (7 kW). Subsequently, the processing proceeds to Step S107, and the number-of-units control unit 54 sets the required capacity of the outdoor unit 40B to 7 kW, and determines the operating frequency of the compressor 43 included in the outdoor unit 40B to satisfy the set required capacity. In other words, the parent interface 50A cooperates with the child interface 50B connected to the outdoor unit 40B to perform control so that the outdoor unit 40A exhibits the required capacity of 8 kW and the outdoor unit 40B exhibits the required capacity of 7 kW.

### (Demanded Capacity Ratio=70%)

In the case in which the demanded capacity ratio received from the AHU controller 30 is 70% (the total demanded capacity is 17.5 kW), the number-of-units control unit 54 performs calculations similar to the case in which the demanded capacity ratio is 60%. In other words, the number-of-units control unit 54 determines the operating frequency of the respective compressors 43 and controls the outdoor unit 40A and the outdoor unit 40B so that the outdoor unit 40A exhibits the required capacity of 8 kW and the outdoor unit 40B exhibits the required capacity of 9.5 kW.

### (Demanded Capacity Ratio=80%)

In the case in which the demanded capacity ratio received from the AHU controller 30 is 80% (the total demanded capacity is 20 kW), similarly to the case in which the demanded capacity ratio is 50%, the number-of-units control unit 54 selects the outdoor unit 40A in Step S106, and sets the required capacity of the outdoor unit 40A to 8 kW in Step S108.

Next, in Step S109, the number-of-units control unit 54 sets the new total demanded capacity to 12 kW (20 kW-8 kW=12 kW). After that, the processing proceeds through steps S110 and S111 to return to Step S105, and since outdoor units 40 of the same capacity do not exist among the available choices, the processing proceeds directly to Step S106.

In Step S106, the number-of-units control unit 54 selects the outdoor unit 40B, and in Step S108, the number-of-units control unit 54 determines the operating frequency of the compressor 43 so that the outdoor unit 40B exhibits the required capacity of 8 kW.

Further, the number-of-units control unit 54 sets the new total demanded capacity to 4 kW (12 kW-8 kW=4 kW) in Step S109, proceeds through Step S110 and Step S111 to return to Step S105, and proceeds to Step S106.

Next, in Step S106, the number-of-units control unit 54 selects the outdoor unit 40C, and in Step S107, the number-of-units control unit 54 determines the operating frequency of the compressor 43 included in the outdoor unit 40C so that the outdoor unit 40C satisfies the required capacity of 4 kW.

As described above, in the case in which the demanded capacity ratio received from the AHU controller 30 is 80%, the parent interface 50A cooperates with the plurality of child interfaces 50B and 50C to perform control so that the outdoor unit 40A exhibits the required capacity of 8 kW, the outdoor unit 40B exhibits the required capacity of 8 kW, and the outdoor unit 40C exhibits the required capacity of 4 kW.

### (Demanded Capacity Ratio=90%)

In the case in which the demanded capacity ratio received from the AHU controller 30 is 90% (the total demanded capacity is 22.5 kW), the number-of-units control unit 54 selects the outdoor unit 40A, similarly to the case in which the demanded capacity ratio is 80%. However, since the total demanded capacity of 90% exceeds the upper limit ratio (80%), in Step S108, the number-of-units control unit 54 sets the required capacities of both the outdoor unit 40A selected first and the outdoor unit 40B selected second to 10 kW (100%). Other processing is executed similarly to the case in which the demanded capacity ratio is 80%. In other words, the number-of-units control unit 54 sets the required capacity of the outdoor unit 40C to 2.5 kW.

### (Demanded Capacity Ratio=100%)

In the case in which the demanded capacity ratio received from the AHU controller 30 is 100% (the total demanded capacity is 25 kW), the number-of-units control unit 54 performs calculations similarly to the case in which the demanded capacity ratio is 90%, and performs control so that the compressors 43 respectively included in the outdoor units 40A to 40C are all driven at the maximum operating frequency.

Table 2 is a table for showing an exemplary calculation of number-of-units control in the all-unit operating mode by the number-of-units control unit 54. In other words, Table 2 supposes the case in which the outdoor temperature is less than or equal to the low reference temperature during the heating operation, or the case in which the outdoor temperature is equal to or greater than the high reference temperature during the cooling operation. In the following, the all-unit operating mode from among the number-of-units control handled by the number-of-units control unit 54 is described using the specific numerical values indicated in Table 2.

The connection relationships between the heat exchanger 25 of the AHU 20 and each of the outdoor units 40A to 40C, the capacity of each of the outdoor units 40A to 40C, the cumulative operating times, the upper limit ratio, and the lower limit ratio are similar to the case of Table 1. In addition, it is supposed that an abnormality has not occurred in any of the outdoor units 40A to 40C.

**[Table 2]**

| Total demanded capacity and demanded capacity ratio from AHU controller 30 | | Required capacity of outdoor unit 40A (capacity: 10 kW) | | Required capacity of outdoor unit 40B (capacity: 10 kW) | | Required capacity of outdoor unit 40C (capacity: 5 kW) | |
|---|---|---|---|---|---|---|---|
| [kW] | [%] | [kW] | [%] | [kW] | [%] | [kW] | [%] |
| 0 | 0% | 0 | 0% | 0 | 0% | 0 | 0% |
| 10 | 40% | 4 | 40% | 4 | 40% | 2 | 40% |
| 12.5 | 50% | 5 | 50% | 5 | 50% | 2.5 | 50% |
| 15 | 60% | 6 | 60% | 6 | 60% | 3 | 60% |
| 17.5 | 70% | 7 | 70% | 7 | 70% | 3.5 | 70% |
| 20 | 80% | 8 | 80% | 8 | 80% | 4 | 80% |
| 22.5 | 90% | 9 | 90% | 9 | 90% | 4.5 | 90% |
| 25 | 100% | 10 | 100% | 10 | 100% | 5 | 100% |

Since Table 2 supposes that there is no abnormality in any of the outdoor units 40A to 40C, and thus in the all-unit operating mode, the number-of-units control unit 54 operates all of the outdoor units 40A to 40C. In this case, the number-of-units control unit 54 calculates the required capacity for each of the outdoor units 40A to 40C in accordance with the individual capacities of the outdoor units 40A to 40C.

In the example shown in Table 2, the number-of-units control unit 54 calculates the required capacity for each of the outdoor units 40A to 40C so that the ratio of the required capacity to the capacity of the outdoor unit 40 becomes equal to the demanded capacity ratio. Consequently, in Table 2, the ratio of the required capacity to the capacity of an outdoor unit 40 is equal among the outdoor units 40A to 40C.

In this way, with number-of-units control in the all-unit operating mode by the number-of-units control unit 54, as long as the demanded capacity ratio does not reach 100%, the compressor 43 is not caused to operate at the maximum operating frequency. Further, when the demanded capacity ratio is less than 80%, it is sufficient for each of the outdoor units 40A to 40C to exhibit a capacity that is 80% or less of its capacity. Consequently, according to number-of-units control in the all-unit operating mode, the compressor 43 can be maintained in a stable operating state, and in addition, a drop in the performance of the compressor 43 can be suppressed.

However, the ratio of the required capacity to the capacity of each outdoor unit 40 is not necessarily required to be equal to the demanded capacity ratio, and the ratio of the required capacity to the capacity of each outdoor unit 40 may also be varied among the outdoor units 40A to 40C taking into account factors such as the stability of the compressor 43.

Although Table 1 and Table 2 exemplify calculation results in the case of increasing the total demanded capacity 10% at a time, in actuality, the total demanded capacity output from the AHU controller 30 varies in accordance with the load on the AHU 20. In other words, the total demanded capacity is not limited to varying regularly as in Table 1.

Further, the above description exemplifies a case of setting the upper limit ratio used when determining the upper limit threshold value to the same ratio as the upper limit ratio used when imposing a limitation on the required capacity of the outdoor unit 40, but the configuration is not limited thereto. In other words, the upper limit ratio used when determining the upper limit threshold value and the upper limit ratio used when imposing a limitation on the required capacity of the outdoor unit 40 may be set to different ratios. Further, the upper limit ratio may also be varied depending on the characteristics of the selected outdoor unit 40.

### (Effects of Embodiment 1)

An air-conditioning system of the related art uses as a heat source a heat pump cycle formed of a single outdoor unit including a compressor, and a heat exchanger of an AHU. The minimum capacity that can be exhibited by a single outdoor unit is generally known to be approximately 40% of its capacity. For this reason, the minimum value of the operating capacity that can be accommodated by continuous operation of the compressor, without having the compressor perform an on-off cycle operation, is approximately 40% (in the example of Table 1, approximately 10 kW). In other words, in the air-conditioning system of the related art, in the case in which the required capacity that is required from the outdoor unit is less than 40% of its capacity, the required capacity is less than the minimum capacity of the outdoor unit. For this reason, when the compressor is caused to operate continuously, the exhibited capacity is excessive, and thus the compressor is required to execute an on-off cycle operation. In other words, with an air-conditioning system including a single outdoor unit as that in the related art, the compressor performs an on-off cycle operation when the total demanded capacity falls below a threshold of 40% (in the example of Table 1, 10 kW).

In contrast, the air-conditioning system 90 according to Embodiment 1 covers large capacities not by a configuration including a single high-capacity outdoor unit, but instead by a configuration including the plurality of outdoor units 40. Additionally, as described above, in the case in which the total demanded capacity is low (in the example of Table 1, 2.5 kW), the number-of-units control unit 54 drives only the one outdoor unit 40C. Further, as the total demanded capacity rises, the number-of-units control unit 54 performs control to raise the operating frequency of the compressor 43 included in the outdoor unit 40, and in addition, increase the number of operating compressors 43 provided in the outdoor units 40 as necessary.

In other words, in the air-conditioning system 90, the minimum value of the operating capacity that can be accommodated by continuous operation of the compressor 43 is the minimum capacity (40%) of the outdoor unit 40 with the smallest capacity, or the value of B% of the total capacity provided by all of the outdoor units 40A to 40C (the lower limit threshold value). In the example of Table 1, the minimum value corresponds to the minimum capacity of the outdoor unit 40C with the smallest capacity, namely, 2 kW (40% of 5 kW), or 10% of the total demanded capacity, namely, 2.5 kW (10% of 25 kW). Specifically, in the example of Table 1, the minimum value of the operating capacity that can be accommodated by continuous operation of the compressor 43 is lowered to 8% of the total capacity provided by all of the outdoor units 40A to 40C (2 kW=8% of 25 kW).

From the above, as long as the total demanded capacity does not fall to the minimum capacity of the outdoor unit 40 with the smallest capacity or to the lower limit threshold value, each compressor 43 does not perform an on-off cycle operation, and thus the air-conditioning system 90 is able to realize stable, continuous operation provided by each compressor 43. As a result, even when the load on the AHU 20 is low, such as in the case of performing ventilation during the intermediate seasons, the load on the AHU 20 can be accommodated by stable, continuous operation, without having the compressor 43 perform an on-off cycle operation. The intermediate seasons refer to seasons of mild weather, such as spring and autumn in Japan. In other words, according to the air-conditioning system 90, the frequency of the on-off cycle operation of the compressor 43 can be reduced, even during times of low load.

Further, according to the air-conditioning system 90, increased lifetime of the system associated with the reduction in the frequency of the on-off cycle operation of the compressor 43 can be realized. In addition, according to the air-conditioning system 90, variations in the outlet temperature of the AHU 20 due to the on-off cycle operation of the compressor 43 can be suppressed, and thus the risk of making people in the air-conditioned rooms uncomfortable can be reduced. Further, since the number-of-units control of Embodiment 1 adopts control according to (1) to (5) described above, it is possible to improve the reliability of the air-conditioning system 90 as a whole.

Additionally, each of the heat pump cycles 100A to 100C includes one compressor 43. Thus, it is also possible to configure the air-conditioning system 90 by using outdoor units with similar specifications as those of a typical air conditioner, namely, an outdoor unit provided with one compressor, as the outdoor units 40A to 40C including the compressor 43, the pressure-reducing device 46, and the outdoor heat exchanger 45. With this arrangement, it is not necessary to develop a new outdoor unit, and thus the manufacturing cost of the air-conditioning system 90 can be reduced.

### Embodiment 2.

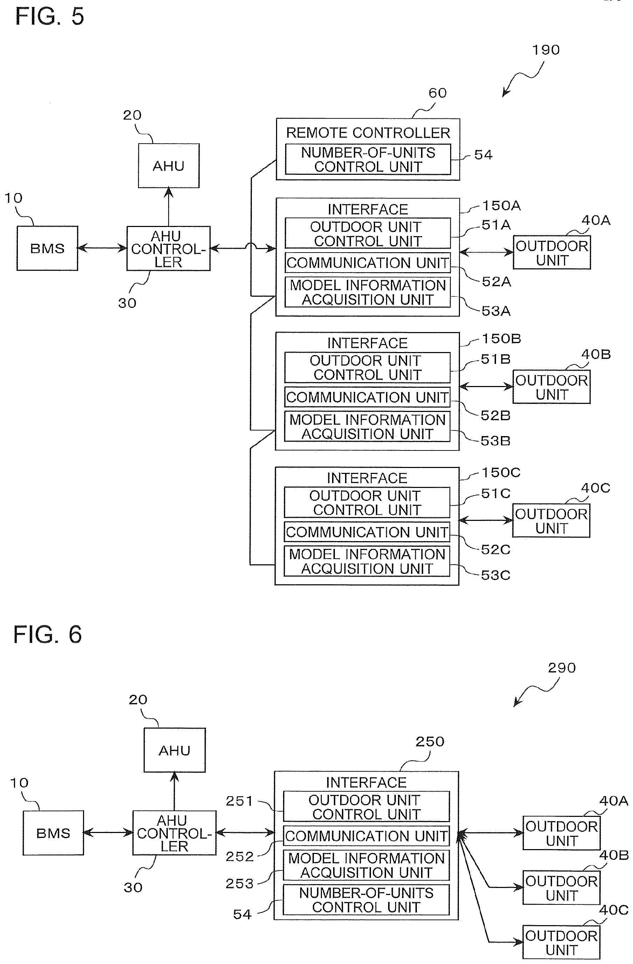

Fig. 5 is a block diagram for illustrating a configuration of an air-conditioning system 190 according to Embodiment 2 of the present invention. A feature of the air-conditioning system 190 resides in that the number-of-units control unit 54 which handles number-of-units control is included in a remote controller 60 configured to receive operations related to the plurality of outdoor units 40A to 40C. On the basis of Fig. 5, the configuration of the air-conditioning system 190 that is particularly different from the air-conditioning system 90 according to Embodiment 1 described above is described. Components which are similar to those of Embodiment 1 are denoted with the same reference symbols, and description thereof is omitted.

As illustrated in Fig. 5, the air-conditioning system 190 includes the remote controller 60 including the number-of-units control unit 54, and a plurality of interfaces 150A to 150C. The interface 150A has a configuration similar to that of the parent interface 50A of Embodiment 1 described above, except that the number-of-units control unit 54 is not included. The interfaces 150B and 150C have a configuration similar to that of the child interfaces 50B and 50C of Embodiment 1 described above, respectively. In other words, the plurality of interfaces 150A to 150C are configured to receive control commands from the number-of-units control unit 54 of the remote controller 60, and perform operations related to number-of-units control.

The remote controller 60 is connected to each of the interfaces 150Ato 150C, and is configured to receive operations related to the settings or the like of each of the outdoor units 40A to 40C. The remote controller 60 corresponds to a remote controller used by an installation contractor or a facility administrator of the air-conditioning system 190 during initial setup, for example.

In addition, the number-of-units control unit 54 included in the remote controller 60 functions similarly to the number-of-units control unit 54 of Embodiment 1 described above. In other words, the number-of-units control unit 54 is configured to, in accordance with the total demanded capacity output from the AHU controller 30 and the individual capacities of the outdoor units 40A to 40C acquired through the model information acquisition units 53A to 53C, select an outdoor unit 40 to be operated, and determine the operating frequency of the compressor 43 included in each selected outdoor unit 40. In other words, in Embodiment 2, the remote controller 60 cooperates with each of the interfaces 150Ato 150C to execute processing such as the processing of generating number-of-units control information, the processing of selecting an outdoor unit 40, the processing of determining the operating frequency of each compressor 43, and the processing of controlling the operation of each of the outdoor units 40A to 40C. The number-of-units control unit 54 is configured to acquire the total demanded capacity output from the AHU controller 30 through the interface 150A.

The air-conditioning system 190 according to Embodiment 2 includes a plurality of heat pump cycles 100A to 100C, which are formed of the plurality of outdoor units 40A to 40C and the heat exchanger 25 included in the AHU 20, as a heat source. For this reason, the number-of-units control unit 54 is able to select at least one outdoor unit 40 to be operated in accordance with the load on the AHU 20 and the individual capacities of the outdoor units 40A to 40C, determine the operating frequency of the compressor 43 included in the selected outdoor unit 40, and control the driving of the compressor 43. Thus, according to the air-conditioning system 190, the frequency of the on-off cycle operation of the compressor 43 can be reduced. Further, since the number-of-units control of Embodiment 2 also adopts control according to (1) to (5) described above, it is possible to improve the reliability of the air-conditioning system 190 as a whole. In other words, according to the air-conditioning system 190, advantageous effects similar to those of the air-conditioning system 90 according to Embodiment 1 can be obtained.

Further, when the configuration of the air-conditioning system 190 is adopted, the functions of the number-of-units control unit 54 can be added externally to an air-conditioning system including components configured to function as at least the outdoor unit control units 51A to 51C, the communication units 52A to 52C, and the model information acquisition units 53A to 53C.

### Embodiment 3.

Fig. 6 is a block diagram for illustrating a configuration of an air-conditioning system 290 according to Embodiment 3 of the present invention. A feature of the air-conditioning system 290 resides in that the number-of-units control unit 54 which handles number-of-units control is included in a single interface 250 that relays the information communication between the AHU controller 30 and each of the outdoor units 40A to 40C. On the basis of Fig. 6, the configuration of the air-conditioning system 290 that is particularly different from the air-conditioning system 90 according to Embodiment 1 described above is described. Components which are similar to those of Embodiments 1 and 2 are denoted with the same reference symbols, and description thereof is omitted.

As illustrated in Fig. 6, the interface 250 of the air-conditioning system 290 is connected to each of the outdoor units 40A to 40C, and includes an outdoor unit control unit 251, a communication unit 252, a model information acquisition unit 253, and the number-of-units control unit 54.

The outdoor unit control unit 251 is configured to control the operation of each of the outdoor units 40A to 40C. In other words, the outdoor unit control unit 251 has the functions of each of the outdoor unit control units 51A to 51C in Embodiment 1 described above. The communication unit 252 is configured to conduct communication processing between different equipment, and has a function of enabling the information communication between equipment from different manufacturers.

The model information acquisition unit 253 is configured to conduct information communication to/from each of the outdoor units 40A to 40C, and acquire information related to the individual capacities of the outdoor units 40A to 40C (model information). In addition, the model information acquisition unit 253 is also configured to transmit the acquired model information about each of the outdoor units 40A to 40C to the number-of-units control unit 54. In other words, the outdoor unit control unit 251 has the functions of each of the model information acquisition units 53A to 53C in Embodiment 1 described above.

In addition, the number-of-units control unit 54 included in the interface 250 functions similarly to the number-of-units control unit 54 of Embodiment 1 described above. In other words, the number-of-units control unit 54 is configured to, in accordance with the total demanded capacity output from the AHU controller 30 and the individual capacities of the outdoor units 40A to 40C acquired through the model information acquisition unit 253, select an outdoor unit 40 to be operated, and determine the operating frequency of the compressor 43 included in the selected outdoor unit 40. In other words, in Embodiment 3, the interface 250 executes processing such as the processing of generating number-of-units control information, the processing of selecting an outdoor unit 40, the processing of determining the operating frequency of each compressor 43, and the processing of controlling the operation of each of the outdoor units 40A to 40C.

The air-conditioning system 290 according to Embodiment 3 includes the plurality of heat pump cycles 100A to 100C, which are formed of the plurality of outdoor units 40A to 40C and the heat exchanger 25 included in the AHU 20, as a heat source. For this reason, the number-of-units control unit 54 is able to select at least one outdoor unit 40 to be operated in accordance with the load on the AHU 20 and the individual capacities of the outdoor units 40A to 40C, determine the operating frequency of the compressor 43 included in the selected outdoor unit 40, and control the driving of the compressor 43. Thus, according to the air-conditioning system 290, the frequency of the on-off cycle operation of the compressor 43 can be reduced. Further, since the number-of-units control of Embodiment 3 also adopts control according to (1) to (5) described above, it is possible to improve the reliability of the air-conditioning system 290 as a whole. In other words, according to the air-conditioning system 290, advantageous effects similar to those of the air-conditioning system 90 according to Embodiment 1 can be obtained.

In addition, the air-conditioning system 290 executes information processing and computational processing that are related to number-of-units control with the single interface 250. Thus, according to the air-conditioning system 290, it is not necessary to provide a number of interfaces equal to the number of outdoor units 40 as in Embodiments 1 and 2 described above, and thus it is possible to simplify the configuration and make the system more compact. However, in the air-conditioning system 290, the number-of-units control unit 54 included in the interface 250 may be provided inside a remote controller, similarly to Embodiment 2.

### Embodiment 4.

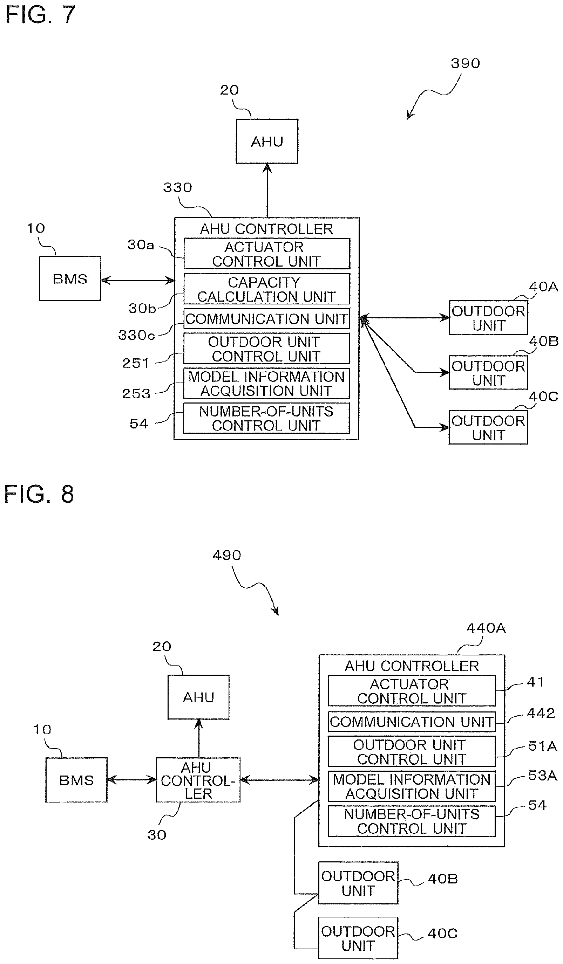

Fig. 7 is a block diagram for illustrating a configuration of an air-conditioning system 390 according to Embodiment 4 of the present invention. A feature of the air-conditioning system 390 resides in that the number-of-units control unit 54 which handles number-of-units control is included in an AHU controller 30. On the basis of Fig. 7, the configuration of the air-conditioning system 390 that is particularly different from the air-conditioning system 90 according to Embodiment 1 described above is described. Components which are similar to those of Embodiments 1 to 3 are denoted with the same reference symbols, and description thereof is omitted.

As illustrated in Fig. 7, the AHU controller 330 of the air-conditioning system 390 includes an actuator control unit 30a, a capacity calculation unit 30b, a communication unit 330c, the outdoor unit control unit 251, the model information acquisition unit 253, and the number-of-units control unit 54. The communication unit 330c conducts communication processing to/from the BMS 10 and each of the outdoor units 40A to 40C.

The number-of-units control unit 54 included in the AHU controller 330 functions similarly to the number-of-units control unit 54 of Embodiment 1 described above. In other words, the number-of-units control unit 54 is configured to, in accordance with the total demanded capacity calculated in the capacity calculation unit 30b and the individual capacities of the outdoor units 40A to 40C acquired through the model information acquisition unit 253, select an outdoor unit 40 to be operated, and determine the operating frequency of the compressor 43 included in the selected outdoor unit 40. In other words, in Embodiment 4, the AHU controller 330 executes processing such as the processing of generating number-of-units control information, the processing of selecting an outdoor unit 40, the processing of determining the operating frequency of each compressor 43, and the processing of controlling the operation of each of the outdoor units 40A to 40C.

In the configuration of the air-conditioning system 390, there is mainly supposed a case in which the BMS 10 or the AHU controller 30, and each of the outdoor units 40A to 40C are products from the same manufacturer.

The air-conditioning system 390 according to Embodiment 4 includes the plurality of heat pump cycles 100A to 100C, which are formed of the plurality of outdoor units 40A to 40C and the heat exchanger 25 included in the AHU 20, as a heat source. For this reason, the number-of-units control unit 54 is able to select at least one outdoor unit 40 to be operated in accordance with the load on the AHU 20 and the individual capacities of the outdoor units 40A to 40C, determine the operating frequency of the compressor 43 included in the selected outdoor unit 40, and control the driving of the compressor 43. Thus, according to the air-conditioning system 390, the frequency of the on-off cycle operation of the compressor 43 can be reduced. Further, since the number-of-units control of Embodiment 4 also adopts control according to (1) to (5) described above, it is possible to improve the reliability of the air-conditioning system 390 as a whole. In other words, according to the air-conditioning system 390, advantageous effects similar to those of the air-conditioning system 90 according to Embodiment 1 can be obtained. Further, when the configuration of the air-conditioning system 490 is adopted, number-of-units control by the number-of-units control unit 54 can be realized without providing one or a plurality of interfaces.

### Embodiment 5.

Fig. 8 is a block diagram for illustrating a configuration of an air-conditioning system 490 according to Embodiment 5 of the present invention. A feature of the air-conditioning system 490 resides in that the number-of-units control unit 54 which handles number-of-units control is included in the AHU controller 30. On the basis of Fig. 8, the configuration of the air-conditioning system 490 that is particularly different from the air-conditioning system 90 according to Embodiment 1 described above is described. Components which are similar to those of Embodiments 1 to 4 are denoted with the same reference symbols, and description thereof is omitted.

As illustrated in Fig. 8, an outdoor unit 440A of the air-conditioning system 490 includes the actuator control unit 41, a communication unit 442, the outdoor unit control unit 51A, the model information acquisition unit 53A, and the number-of-units control unit 54. The communication unit 442 conducts communication processing to/from the AHU controller 30, the outdoor unit 40B, and the outdoor unit 40C.

The number-of-units control unit 54 included in the outdoor unit 440A functions similarly to the number-of-units control unit 54 of Embodiment 1 described above. In other words, the number-of-units control unit 54 is configured to, in accordance with the total demanded capacity output from the AHU controller 30 and the individual capacities of the outdoor units 40A to 40C acquired through the model information acquisition units 53A to 53C, select an outdoor unit 40 to be operated, and determine the operating frequency of the compressor 43 included in the selected outdoor unit 40. In other words, in Embodiment 5, the outdoor unit 440A executes processing such as the processing of generating number-of-units control information, the processing of selecting an outdoor unit 40, the processing of determining the operating frequency of each compressor 43, and the processing of controlling the operation of each of the outdoor units 40A to 40C.

The air-conditioning system 490 according to Embodiment 5 includes the plurality of heat pump cycles 100A to 100C, which are formed of the plurality of outdoor units 40A to 40C and the heat exchanger 25 included in the AHU 20, as a heat source. For this reason, the number-of-units control unit 54 is able to select at least one outdoor unit 40 to be operated in accordance with the load on the AHU 20 and the individual capacities of the outdoor units 40A to 40C, determine the operating frequency of the compressor 43 included in the selected outdoor unit 40, and control the driving of the compressor 43. Thus, according to the air-conditioning system 490, the frequency of the on-off cycle operation of the compressor 43 can be reduced. Further, since the number-of-units control of Embodiment 5 also adopts control according to (1) to (5) described above, it is possible to improve the reliability of the air-conditioning system 490 as a whole. In other words, according to the air-conditioning system 490, advantageous effects similar to those of the air-conditioning system 90 according to Embodiment 1 can be obtained. Further, when the configuration of the air-conditioning system 490 is adopted, number-of-units control by the number-of-units control unit 54 can be realized without providing one or a plurality of interfaces.

Embodiments 1 to 5 described above are preferred specific examples of an air-conditioning system, but the technical scope of the present invention is not limited to those modes. For example, in Fig. 1, Fig. 2, and Fig. 5 to Fig. 8, a case in which there are three connected outdoor units 40 is exemplified, but the configuration is not limited thereto, and the air-conditioning systems 90, 190, 290, 390, and 490 may include an arbitrary number of outdoor units 40. Further, the plurality of outdoor units 40 may include two or more outdoor units 40 of the same capacity, or all may have different capacities.

Further, in Embodiments 1 to 5, a case in which the capacity calculation unit 30b calculates the demanded capacity ratio is exemplified, but the configuration is not limited thereto, and the number-of-units control unit 54 may also calculate the demanded capacity ratio using the total demanded capacity and the individual capacities of the outdoor units 40A to 40C. Otherwise, the configurations and operations exemplified as being applicable in Embodiment 1 can also be applied to Embodiments 2 to 5.

### Reference Signs List

10 building management system (BMS) 11 outlet air temperature sensor
12 heat exchanger inlet temperature sensor 13 indoor temperature sensor 14 outdoor temperature sensor 20 air handling unit (AHU)
20A casing21 first louver 22 first filter 23 heat recovery device
24 supply fan 25 heat exchanger 26 second louver 27 second filter 28 exhaust fan 30, 330 AHU controller (controller) 30a actuator control unit 30b capacity calculation unit 30c, 330c communication unit 40, 40A to 40C, 440A outdoor unit 41 actuator control unit 42, 442 communication unit 43 compressor 44 four-way valve 45 outdoor heat exchanger 46 pressure-reducing device 50 interface 50A parent interface 50B, 50C child interface 51A to 51C, 251 outdoor unit control unit 52A to 52C, 252 communication unit 53A to 53C, 253 model information acquisition unit 54 number-of-units control unit 60 remote controller 71 first flow channel 72 second flow channel 80 refrigerant pipe 90, 190, 290, 390, 490 air-conditioning system 100, 100A to 100C heat pump cycle 150A to 150C, 250 interface

## Claims

1. An air-conditioning system, comprising:
a plurality of outdoor units, each comprising a compressor, an outdoor heat exchanger, and a pressure-reducing device;
an air handling unit comprising a casing, in which a flow channel configured to perform ventilation by replacing air inside and outside a construction is formed, and a heat exchanger, which is provided inside the casing, and through which the air flowing in the flow channel passes; and
a number-of-units control unit configured to control an operating state of the plurality of outdoor units,
wherein the plurality of outdoor units and the air handling unit are connected to each other by refrigerant pipes to form a plurality of heat pump cycles, each comprising the compressor, the heat exchanger, the pressure-reducing device, and the outdoor heat exchanger, and
wherein the number-of-units control unit is configured to select, based on a load on the air handling unit and individual capacities of the plurality of outdoor units, at least one outdoor unit to be operated from among the plurality of outdoor units, and to cause the selected outdoor unit to operate.

2. The air-conditioning system of claim 1, wherein the number-of-units control unit is configured to:
calculate from the load on the air handling unit a total required capacity to be exhibited by all of the plurality of outdoor units;
calculate a required capacity to be exhibited by the outdoor unit selected from among the plurality of outdoor units to satisfy the total required capacity; and
determine, in accordance with the required capacity, an operating frequency of the compressor included in the outdoor unit selected from among the plurality of outdoor units.

3. The air-conditioning system of claim 2, wherein the number-of-units control unit is configured to calculate, when the total required capacity is less than or equal to an upper limit threshold value, the required capacity of the outdoor unit selected from among the plurality of outdoor units so that a ratio with respect to a capacity of the outdoor unit does not exceed an upper limit ratio.

4. The air-conditioning system of any one of claims 1 to 3, wherein the plurality of outdoor units comprise two or more outdoor units of the same capacity.

5. The air-conditioning system of claim 4, wherein the number-of-units control unit is configured to:
compare a cumulative operating time of the compressor included in each of the outdoor units of the same capacity;
set a priority ranking to preferentially operate the outdoor units in order from the outdoor unit including the compressor having a short cumulative operating time; and
select the outdoor unit to be operated by following the priority ranking.

6. The air-conditioning system of any one of claims 1 to 3, wherein each of the plurality of outdoor units has a different capacity.

7. The air-conditioning system of any one of claims 1 to 6, wherein the number-of-units control unit is configured to exclude one of the plurality of outdoor units in an abnormal state from available choices when selecting the outdoor unit to be operated.

8. The air-conditioning system of any one of claims 1 to 7, wherein the number-of-units control unit is configured to determine the operating frequency of the compressor included in the outdoor unit to be operated so that a total of operating capacities to be exhibited respectively by the plurality of outdoor units becomes equal to or greater than a preset lower limit threshold value.

9. The air-conditioning system of any one of claims 1 to 8, wherein the number-of-units control unit is configured to cause, when an outdoor temperature is less than or equal to a low reference temperature during a heating operation, all of the plurality of outdoor units to operate.

10. The air-conditioning system of any one of claims 1 to 9, wherein the number-of-units control unit is configured to cause, when an outdoor temperature is equal to or greater than a high reference temperature during a cooling operation, all of the plurality of outdoor units to operate.

11. The air-conditioning system of any one of claims 2 to 8, wherein the number-of-units control unit is configured to:
execute a comparison of the capacity of each of the plurality of outdoor units to the total required capacity in order from the outdoor unit of small capacity; and
select, when the outdoor unit having a capacity equal to or greater than the total required capacity exists, the outdoor unit as the outdoor unit to be operated.

12. The air-conditioning system of any one of claims 1 to 11, further comprising:
a controller configured to control an operation of the air handling unit; and
an interface configured to relay information communication between the controller and the plurality of outdoor units,
wherein the number-of-units control unit is included in the interface.

13. The air-conditioning system of claim 12,
wherein the interface is provided for each of the plurality of outdoor units, and
wherein the number-of-units control unit is included in one of the plurality of interfaces.

14. The air-conditioning system of any one of claims 1 to 11, further comprising:
a controller configured to control an operation of the air handling unit;
an interface configured to relay information communication between the controller and the plurality of outdoor units; and
a remote controller connected to the interface, and configured to receive an operation related to the plurality of outdoor units,
wherein the number-of-units control unit is included in the remote controller.

15. The air-conditioning system of any one of claims 1 to 11, further comprising a controller connected to the plurality of outdoor units, and configured to control an operation of the air handling unit,
wherein the number-of-units control unit is included in the controller.

16. The air-conditioning system of any one of claims 1 to 11, further comprising a controller connected to the plurality of outdoor units, and configured to control an operation of the air handling unit,
wherein the number-of-units control unit is included in one of the plurality of outdoor units.
